# EUROPEAN PATENT APPLICATION

(11) **EP 4 726 944 A1**
(43) Date of publication of application: **15.04.2026**
(21) Application number: 25201576.3
(22) Date of filing: 11.09.2025
(51) Int. Cl.: H02J 1/102, H02J 7/34

(54) **POWER SUPPLY SYSTEM AND DC-DC BATTERY**

(30) Priority: 09.10.2024 CN 202411405940
(71) Applicant: Huawei Digital Power Technologies Co., Ltd., Shenzhen, Guangdong 518043 (CN)
(72) Inventor: Tuo, Hong, Shenzhen, 518043 (CN); Xie, Huanmao, Shenzhen, 518043 (CN); Du, Changlei, Shenzhen, 518043 (CN)
(74) Representative: Gill Jennings & Every LLP

(57) **Abstract**

This application provides a power supply system and a DC-DC battery. The power supply system includes a straight-through battery and the DC-DC battery. The DC-DC battery includes a cell pack and a DC-DC conversion circuit. Both the straight-through battery and the DC-DC battery are configured to supply power to at least one load through a bus. Under a condition that a voltage of the bus is less than a preset operating voltage, when a voltage of a direct current output by the straight-through battery is greater than a voltage of a direct current output by the DC-DC battery, the straight-through battery is configured to supply power to the at least one load; or when a voltage of a direct current output by the straight-through battery is less than a voltage of a direct current output by the DC-DC battery, the DC-DC battery is configured to supply power to the at least one load. The DC-DC conversion circuit is configured to convert a voltage output by the cell pack, for the straight-through battery and the DC-DC battery to alternately supply power to the at least one load for a plurality of times. According to this application, normal power consumption of the at least one load in a power grid exception can be ensured. This can improve reliability of power consumption of the at least one load in the power grid exception.

## Description

### TECHNICAL FIELD

This application relates to the power supply field, and in particular, to a power supply system and a DC-DC battery.

### BACKGROUND

Straight-through batteries (such as lead-acid batteries) are widely used in communication base stations due to long-term development and mature technologies. However, the lead-acid batteries have small capacity and short life. In a poor environment, a part of lead-acid batteries may actually output lower electric energy and have shorter actual service life. As a result, normal power consumption of a load in a power grid failure is affected.

### SUMMARY

This application provides a power supply system and a DC-DC battery. When a power grid cannot supply power to a load due to a power grid exception, both a straight-through battery and the DC-DC battery can supply power to the load. In addition, compared with the straight-through battery, the DC-DC battery has better performance and longer life, and can ensure normal power consumption of the load in the power grid exception, thereby improving reliability of power consumption of the load in the power grid exception.

According to a first aspect, a power supply system is provided. The power supply system includes a straight-through battery and a direct current direct current DC-DC battery. The DC-DC battery includes a cell pack and a DC-DC conversion circuit. Both the straight-through battery and the DC-DC battery are configured to supply power to at least one load through a bus. Under a condition that a voltage of the bus is less than a preset operating voltage, when a voltage of a direct current output by the straight-through battery is greater than a voltage of a direct current output by the DC-DC battery, the straight-through battery is configured to supply power to the at least one load; or when a voltage of a direct current output by the straight-through battery is less than a voltage of a direct current output by the DC-DC battery, the DC-DC battery is configured to supply power to the at least one load. The DC-DC conversion circuit is configured to convert a voltage output by the cell pack, for the straight-through battery and the DC-DC battery to alternately supply power to the at least one load for a plurality of times.

In this embodiment of this application, when the voltage of the bus is less than the preset operating voltage, both the straight-through battery and the DC-DC battery can supply power to the at least one load, thereby ensuring normal power consumption of the at least one load in a power grid exception. In addition, because the DC-DC battery has better performance and longer life, compared with a solution in which the straight-through battery separately supplies power to the at least one load, in this application, the straight-through battery and the DC-DC battery are designed to alternately supply power to the at least one load. This can further ensure continuous power consumption of the at least one load in the power grid exception, thereby improving reliability of power consumption of the at least one load in the power grid exception.

In addition, when the voltage of the bus is less than the preset operating voltage, the DC-DC conversion circuit converts the voltage output by the cell pack, so that the straight-through battery and the DC-DC battery can be configured to alternately supply power to the at least one load for a plurality of times. In this way, compared with a solution in which one of the straight-through battery and the DC-DC battery is basically discharged completely and then the other battery supplies power to the at least one load in a power grid failure, in this application, the straight-through battery and the DC-DC battery are designed to alternately supply power to the at least one load for a plurality of times. This can avoid impact on performance and life of one of the straight-through battery and the DC-DC battery that is discharged completely, thereby improving performance of the straight-through battery and the DC-DC battery and prolonging service life of the straight-through battery and the DC-DC battery.

With reference to the first aspect, in a possible design, an initial voltage of the direct current output by the straight-through battery is greater than a first voltage corresponding to the direct current output by the DC-DC battery, and the straight-through battery is configured to supply power to the at least one load. When the voltage of the direct current output by the straight-through battery is equal to the first voltage, the DC-DC battery is configured to output the direct current with the first voltage to supply power to the at least one load.

In this embodiment of this application, if the initial voltage of the direct current output by the straight-through battery is greater than the first voltage corresponding to the direct current output by the DC-DC battery, when the voltage of the bus is less than the preset operating voltage, the straight-through battery supplies power to the at least one load prior to the DC-DC battery, and when the voltage of the direct current output by the straight-through battery reaches the first voltage, the DC-DC battery starts to supply power to the at least one load at the first voltage, so that the straight-through battery and the DC-DC battery can alternately supply power to the at least one load. In addition, because the straight-through battery is discharged prior to the DC-DC battery, the straight-through battery can be discharged as much as possible. This can prolong service life of the DC-DC battery. In addition, in most cases, the power grid failure is merely temporary. In other words, the power grid may restore power supply to the at least one load in a short time period, that is, the power grid may restore power supply after the straight-through battery is discharged for a period of time. In this way, the DC-DC battery does not need to be discharged at the first voltage. This can prolong service life of the DC-DC battery.

In addition, in the design of this application, in the power grid failure, the straight-through battery is discharged prior to the DC-DC battery, so that the straight-through battery is preferentially discharged completely. After the straight-through battery is discharged for a plurality of times, performance of the straight-through battery deteriorates, and service life of the straight-through battery is shortened. In this case, the straight-through battery needs to be scrapped. In other words, the straight-through battery is no longer used subsequently. In this way, in the subsequent power grid failure or insufficient power supply of the power grid, the DC-DC battery with better performance may be used to supply power to the at least one load. This improves reliability of supplying power to the at least one load by the power supply system.

With reference to the first aspect, in a possible design, when the DC-DC battery is discharged at the first voltage, and the DC-DC battery meets a first preset condition, the DC-DC conversion circuit is configured to control the DC-DC battery to output a second voltage that is less than the first voltage, and the straight-through battery is configured to supply power to the at least one load. The first preset condition includes at least one of the following: A depth of discharge of the DC-DC battery reaches a first depth of discharge, remaining electric energy of the DC-DC battery reaches first remaining electric energy, and the DC-DC battery is discharged at the first voltage for first preset duration. When the voltage of the direct current output by the straight-through battery is equal to the second voltage, the DC-DC battery is configured to output the direct current with the second voltage to supply power to the at least one load. In this embodiment of this application, when the DC-DC battery is discharged at the first voltage, and the DC-DC battery meets the first preset condition, the DC-DC conversion circuit is configured to control the DC-DC battery to output the second voltage. Because the second voltage is less than the first voltage, the straight-through battery starts to supply power to the at least one load in this case. When the voltage of the direct current output by the straight-through battery reaches the second voltage, the DC-DC battery starts to supply power to the at least one load at the second voltage, so that the straight-through battery and the DC-DC battery can alternately supply power to the at least one load. In addition, because the straight-through battery is discharged prior to the DC-DC battery, the straight-through battery can be discharged as much as possible. This can prolong service life of the DC-DC battery. In addition, in most cases, the power grid failure is merely temporary. In other words, the power grid may restore power supply to the at least one load in a short time period, that is, the power grid may restore power supply after the straight-through battery is discharged for a period of time. In this way, the DC-DC battery does not need to be discharged at the second voltage. This can prolong service life of the DC-DC battery.

In addition, in the design of this application, after the DC-DC battery supplies the power to the at least one load at the first voltage for a period of time, the straight-through battery is discharged prior to the DC-DC battery, so that the straight-through battery is preferentially discharged completely. After the straight-through battery is discharged for a plurality of times, performance of the straight-through battery deteriorates, and service life of the straight-through battery is shortened. In this case, the straight-through battery needs to be scrapped. In other words, the straight-through battery is no longer used subsequently. In this way, in the subsequent power grid failure or insufficient power supply of the power grid, the DC-DC battery with better performance may be used to supply power to the at least one load. This improves reliability of supplying power to the at least one load by the power supply system.

With reference to the first aspect, in a possible design, when the DC-DC battery is discharged at the second voltage, and the DC-DC battery meets a second preset condition, the DC-DC conversion circuit is configured to control the DC-DC battery to output a third voltage that is less than the second voltage, and the straight-through battery is configured to supply power to the at least one load. The second preset condition includes at least one of the following: The depth of discharge of the DC-DC battery reaches a second depth of discharge, the remaining electric energy of the DC-DC battery reaches second remaining electric energy, and the DC-DC battery is discharged at the second voltage for second preset duration, where the second depth of discharge is greater than the first depth of discharge, and the second remaining electric energy is less than the first remaining electric energy. When the voltage of the direct current output by the straight-through battery is equal to the third voltage, the DC-DC battery is configured to output the direct current with the third voltage to supply power to at least one load.

In this embodiment of this application, when the DC-DC battery is discharged at the second voltage, and the DC-DC battery meets the second preset condition, the DC-DC conversion circuit is configured to control the DC-DC battery to output the third voltage. Because the third voltage is less than the second voltage, the straight-through battery starts to supply power to the at least one load in this case. When the voltage of the direct current output by the straight-through battery is equal to the third voltage, the DC-DC battery starts to supply power to the at least one load at the third voltage, so that the straight-through battery and the DC-DC battery can alternately supply power to the at least one load. In addition, because the straight-through battery is discharged prior to the DC-DC battery, the straight-through battery can be discharged as much as possible. This can prolong service life of the DC-DC battery. In addition, in most cases, the power grid failure is merely temporary. In other words, the power grid may restore power supply to the at least one load in a short time period, that is, the power grid may restore power supply after the straight-through battery is discharged for a period of time. In this way, the DC-DC battery does not need to be discharged at the third voltage. This can prolong service life of the DC-DC battery.

In addition, in the design of this application, after the DC-DC battery supplies the power to the at least one load at the second voltage for a period of time, the straight-through battery is discharged prior to the DC-DC battery, so that the straight-through battery is preferentially discharged completely. After the straight-through battery is discharged for a plurality of times, performance of the straight-through battery deteriorates, and service life of the straight-through battery is shortened. In this case, the straight-through battery needs to be scrapped. In other words, the straight-through battery is no longer used subsequently. In this way, in the subsequent power grid failure or insufficient power supply of the power grid, the DC-DC battery with better performance may be used to supply power to the at least one load. This improves reliability of supplying power to the at least one load by the power supply system.

With reference to the first aspect, in a possible design, when the DC-DC battery is discharged at the third voltage, and the DC-DC battery meets a third preset condition, the DC-DC conversion circuit is configured to control the DC-DC battery to output a fourth voltage that is less than the third voltage, and the straight-through battery is configured to supply power to the at least one load. The third preset condition includes at least one of the following: The depth of discharge of the DC-DC battery reaches a third depth of discharge, the remaining electric energy of the DC-DC battery reaches third remaining electric energy, and the DC-DC battery is discharged at the third voltage for third preset duration, where the third depth of discharge is greater than the second depth of discharge, and the third remaining electric energy is less than the second remaining electric energy. When the voltage of the direct current output by the straight-through battery is equal to the fourth voltage, the DC-DC battery is configured to output the direct current with the fourth voltage to supply power to the at least one load.

In this embodiment of this application, when the DC-DC battery is discharged at the third voltage, and the DC-DC battery meets the third preset condition, the DC-DC conversion circuit is configured to control the DC-DC battery to output the fourth voltage. Because the fourth voltage is less than the third voltage, the straight-through battery starts to supply power to the at least one load in this case. When the voltage of the direct current output by the straight-through battery is equal to the fourth voltage, the DC-DC battery starts to supply power to the at least one load at the fourth voltage, so that the straight-through battery and the DC-DC battery can alternately supply power to the at least one load. In addition, because the straight-through battery is discharged prior to the DC-DC battery, the straight-through battery can be discharged as much as possible. This can prolong service life of the DC-DC battery. In addition, in most cases, the power grid failure is merely temporary. In other words, the power grid may restore power supply to the at least one load in a short time period, that is, the power grid may restore power supply after the straight-through battery is discharged for a period of time. In this way, the DC-DC battery does not need to be discharged at the fourth voltage. This can prolong service life of the DC-DC battery.

In addition, in the design of this application, after the DC-DC battery supplies the power to the at least one load at the third voltage for a period of time, the straight-through battery is discharged prior to the DC-DC battery, so that the straight-through battery is preferentially discharged completely. After the straight-through battery is discharged for a plurality of times, performance of the straight-through battery deteriorates, and service life of the straight-through battery is shortened. In this case, the straight-through battery needs to be scrapped. In other words, the straight-through battery is no longer used subsequently. In this way, in the subsequent power grid failure or insufficient power supply of the power grid, the DC-DC battery with better performance may be used to supply power to the at least one load. This improves reliability of supplying power to the at least one load by the power supply system.

With reference to the first aspect, in a possible design, a first voltage corresponding to the direct current output by the DC-DC battery is greater than an initial voltage of the direct current output by the straight-through battery, and the DC-DC battery is configured to output the direct current with the first voltage to supply power to the at least one load.

When the DC-DC battery is discharged at the first voltage, and the DC-DC battery meets a first preset condition, the DC-DC conversion circuit is configured to control the DC-DC battery to output a second voltage that is less than the initial voltage of the straight-through battery, and the straight-through battery is configured to supply power to the at least one load. The first preset condition includes at least one of the following: A depth of discharge of the DC-DC battery reaches a first depth of discharge, remaining electric energy of the DC-DC battery reaches first remaining electric energy, and the DC-DC battery is discharged at the first voltage for first preset duration.

In this embodiment of this application, when the voltage of the bus is less than the preset operating voltage, the first voltage corresponding to the direct current output by the DC-DC battery is greater than the initial voltage of the direct current output by the straight-through battery. In this case, the DC-DC battery supplies power to the at least one load prior to the straight-through battery, and the DC-DC battery is discharged as much as possible. This prolongs service life of the straight-through battery. In addition, in most cases, the power grid failure is merely temporary. In other words, the power grid may restore power supply to the at least one load in a short time period, that is, the power grid may restore power supply after the DC-DC battery is discharged for a period of time. In this way, the straight-through battery does not need to be discharged. This can prolong service life of the straight-through battery.

With reference to the first aspect, in a possible design, when the voltage of the direct current output by the straight-through battery is equal to the second voltage, the DC-DC battery is configured to output the direct current with the second voltage to supply power to the at least one load. When the DC-DC battery is discharged at the second voltage, and the DC-DC battery meets a second preset condition, the DC-DC conversion circuit is configured to control the DC-DC battery to output a third voltage that is less than the second voltage, and the straight-through battery is configured to supply power to the at least one load. The second preset condition includes at least one of the following: The depth of discharge of the DC-DC battery reaches a second depth of discharge, the remaining electric energy of the DC-DC battery reaches second remaining electric energy, and the DC-DC battery is discharged at the second voltage for second preset duration, where the second depth of discharge is greater than the first depth of discharge, and the second remaining electric energy is less than the first remaining electric energy.

In this embodiment of this application, when the voltage of the direct current output by the straight-through battery is equal to the second voltage, the DC-DC battery supplies power to the at least one load at the second voltage. When the DC-DC battery is discharged at the second voltage, and the DC-DC battery meets the second preset condition, the DC-DC conversion circuit is configured to control the DC-DC battery to output the third voltage. Because the third voltage is less than the second voltage, the straight-through battery starts to supply power to the at least one load. In this way, the straight-through battery and the DC-DC battery can be alternately discharged. In addition, when the voltage of the direct current output by the straight-through battery is equal to the second voltage, the DC-DC battery supplies power to the at least one load prior to the straight-through battery, and the DC-DC battery is discharged as much as possible. This can prolong service life of the straight-through battery.

With reference to the first aspect, in a possible design, when the voltage of the direct current output by the straight-through battery is equal to the third voltage, the DC-DC battery is configured to output the direct current with the third voltage to supply power to the at least one load. When the DC-DC battery is discharged at the third voltage, and the DC-DC battery meets a third preset condition, the DC-DC conversion circuit is configured to control the DC-DC battery to output a fourth voltage that is less than the third voltage, and the straight-through battery is configured to supply power to the at least one load. The third preset condition includes at least one of the following: The depth of discharge of the DC-DC battery reaches a third depth of discharge, the remaining electric energy of the DC-DC battery reaches third remaining electric energy, and the DC-DC battery is discharged at the third voltage for third preset duration, where the third depth of discharge is greater than the second depth of discharge, and the third remaining electric energy is less than the second remaining electric energy.

In this embodiment of this application, when the voltage of the direct current output by the straight-through battery reaches the third voltage, the DC-DC battery supplies power to the at least one load at the third voltage. When the DC-DC battery is discharged at the third voltage, and the DC-DC battery meets the third preset condition, the DC-DC conversion circuit is configured to control the DC-DC battery to output the fourth voltage. Because the fourth voltage is less than the third voltage, the straight-through battery starts to supply power to the at least one load. In this way, the straight-through battery and the DC-DC battery can be alternately discharged. In addition, when the voltage of the direct current output by the straight-through battery is equal to the third voltage, the DC-DC battery supplies power to the at least one load prior to the straight-through battery, and the DC-DC battery is discharged as much as possible. This prolongs service life of the straight-through battery.

With reference to the first aspect, in a possible design, the first voltage is greater than a preset alarm voltage, and the preset alarm voltage indicates the power supply system to generate an instruction for indicating a low-voltage alarm for the straight-through battery or the DC-DC battery.

In this embodiment of this application, because the first voltage is greater than the preset alarm voltage, in this discharge phase, the voltages of the direct currents output by the straight-through battery and the DC-DC battery are always greater than the preset low-voltage alarm voltage. Therefore, the power supply system does not generate the alarm instruction. This can avoid a case in which the power grid fails temporarily, but the power supply system has generated the alarm instruction, thereby avoiding a waste of maintenance resources.

With reference to the first aspect, in a possible design, the second voltage is less than a preset alarm voltage, and the preset alarm voltage indicates the power supply system to generate an instruction for indicating a low-voltage alarm for the straight-through battery or the DC-DC battery. The power supply system is configured to: when the straight-through battery or the DC-DC battery supplies power to the at least one load at the second voltage, generate the instruction for indicating the low-voltage alarm for the straight-through battery or the DC-DC battery.

In this embodiment of this application, because the second voltage is less than the preset alarm voltage, in the process in which the DC-DC battery starts to supply the power to the at least one load at the second voltage when the voltage of the direct current output by the straight-through battery reaches the second voltage, the voltages of the direct currents output by the straight-through battery and the DC-DC battery reach the preset alarm voltage, the power supply system generates the instruction for indicating the low-voltage alarm for the straight-through battery or the DC-DC battery, to notify maintenance personnel to repair the power grid as soon as possible. This can avoid a case in which the power supply system does not generate the alarm instruction in time when the straight-through battery and the DC-DC battery alternately supply power to the at least one load, thereby improving service performance of the straight-through battery and the DC-DC battery and prolonging life of the straight-through battery and the DC-DC battery.

With reference to the first aspect, in a possible design, the third voltage is less than a preset LLVD voltage, and the preset LLVD voltage indicates the power supply system to disconnect a part of loads from the bus. The power supply system is configured to: disconnect the part of loads from the bus when the straight-through battery or the DC-DC battery supplies power to the at least one load at the third voltage.

In this embodiment of this application, because the third voltage is less than the preset LLVD voltage, when the voltage for supplying power to the at least one load reaches the third voltage, the power supply system may disconnect the part of loads from the bus, so that the straight-through battery or the DC-DC battery supplies power to the remaining load. This can prolong duration in which the power supply system supplies power to the remaining load.

With reference to the first aspect, in a possible design, the fourth voltage is less than a preset BLVD voltage, and the preset BLVD voltage indicates the power supply system to control the straight-through battery or the DC-DC battery to stop outputting the direct current. The power supply system is configured to: when the voltage of the direct current output by the straight-through battery or the DC-DC battery reaches the fourth voltage, control the straight-through battery or the DC-DC battery to stop outputting the direct current.

In this embodiment of this application, when the voltage for supplying power to the at least one load reaches the fourth voltage, because the fourth voltage is less than the preset BLVD voltage, the power supply system may disconnect the at least one load from the bus, and then the power supply system stops supplying power to the at least one load. This can reduce the depth of discharge of the straight-through battery or the DC-DC battery, thereby prolonging service life of the straight-through battery or the DC-DC battery.

With reference to the first aspect, in a possible design, the power supply system is configured to disconnect, from the bus each time the straight-through battery replaces the DC-DC battery to supply power to the at least one load, or each time the DC-DC battery replaces the straight-through battery to supply power to the at least one load, a part of loads currently connected to the bus.

In this embodiment of this application, each time the straight-through battery replaces the DC-DC battery to supply power to the at least one load, or each time the DC-DC battery replaces the straight-through battery to supply power to the at least one load, the power supply system may disconnect, from the bus, a part of loads currently connected to the bus. This can as much as possible prolong duration in which the power supply system supplies power to a primary load, and can as much as possible ensure reliability of supplying power to the primary load by the power supply system.

According to a second aspect, a DC-DC battery is provided. The DC-DC battery includes a cell pack and a DC-DC conversion circuit. The DC-DC conversion circuit is configured to convert a voltage output by the cell pack, and output a voltage after the conversion to at least one load through a bus. The DC-DC conversion circuit is configured to: when a voltage of an output port of the DC-DC battery is less than a preset operating voltage, convert the voltage output by the cell pack into a first voltage; and when the DC-DC battery meets a first preset condition, convert the voltage output by the cell pack into a second voltage, where the second voltage is less than the first voltage. The first preset condition includes at least one of the following: A depth of discharge of the DC-DC battery reaches a first depth of discharge, remaining electric energy of the DC-DC battery reaches first remaining electric energy, and discharge duration of the DC-DC battery reaches first preset duration.

In this embodiment of this application, when the voltage of the output port of the DC-DC battery is less than the preset operating voltage, the DC-DC battery supplies power to the at least one load, to ensure continuous power consumption of the at least one load. The DC-DC conversion circuit may convert the voltage output by the cell pack into the first voltage, so that the DC-DC battery supplies power to the at least one load at the first voltage. When the DC-DC battery is discharged at the first voltage, and the DC-DC battery meets the first preset condition, the DC-DC conversion circuit converts the voltage output by the cell pack into the second voltage. Because the second voltage is less than the first voltage, overdischarge of the DC-DC battery can be avoided. This can improve performance of the DC-DC battery and prolong service life of the DC-DC battery.

In an example, the first voltage may be set to be greater than a preset low-voltage alarm voltage. In this case, when the DC-DC battery supplies power to the at least one load at the first voltage, because the first voltage corresponding to a direct current output by the DC-DC battery is always greater than the preset alarm voltage, a power supply system does not generate an alarm instruction when the DC-DC battery supplies power to the at least one load at the first voltage. This can avoid a case in which a power grid fails temporarily, but the power supply system has generated the alarm instruction, thereby avoiding a waste of maintenance resources.

In another example, the second voltage may be set to be less than the preset low-voltage alarm voltage. In this case, when the DC-DC conversion circuit converts the voltage output by the cell pack into the second voltage, because the second voltage is less than the preset low-voltage alarm voltage, the power supply system may generate the alarm instruction, to notify maintenance personnel to maintain the power grid as soon as possible.

With reference to the second aspect, in a possible design, the DC-DC conversion circuit is further configured to convert the voltage output by the cell pack into different voltages periodically, where a voltage after each time of conversion of the DC-DC conversion circuit is less than a voltage before the conversion of the DC-DC conversion circuit, and the voltage output by the DC-DC conversion circuit is constant in each period of time.

In this embodiment of this application, in the discharge process of the DC-DC battery, the DC-DC battery supplies power to the at least one load at different voltages. When the DC-DC conversion circuit converts the voltage output by the cell pack into a different voltage each time, because a voltage after each time of conversion of the DC-DC conversion circuit is less than a voltage before conversion of the DC-DC conversion circuit, duration in which the DC-DC battery supplies power to a primary load can be prolonged as much as possible, to ensure reliable power supply to the primary load.

### BRIEF DESCRIPTION OF DRAWINGS

FIG. 1 is a diagram of a structure of a base station according to an embodiment of this application;
FIG. 2 is a diagram of a power supply system according to an embodiment of this application;
FIG. 3 is a diagram of a discharge curve of a power supply system according to an embodiment of this application;
FIG. 4 is a diagram of another discharge curve of a power supply system according to an embodiment of this application;
FIG. 5 is a diagram of still another discharge curve of a power supply system according to an embodiment of this application;
FIG. 6 is a diagram of a DC-DC battery according to an embodiment of this application;
FIG. 7 is a diagram of a discharge curve of a DC-DC battery according to an embodiment of this application; and
FIG. 8 is a diagram of another discharge curve of a DC-DC battery according to an embodiment of this application.

### DESCRIPTION OF EMBODIMENTS

For ease of understanding the solutions of this application, the following first describes terms that may be used.

Low-voltage alarm voltage: When mains is cut off, a battery is responsible for supplying power. When an output voltage of a cell pack of the battery reaches a specific degree, the output voltage of the cell pack is low, and it indicates that the remaining available electric energy is low. In this case, a power supply system generates a low-voltage alarm instruction to prompt limited remaining available duration and a power failure of the load.

Load low voltage disconnection (load low voltage disconnection, LLVD): When mains is cut off, a battery is responsible for supplying power. If mains supply is not restored after the battery supplies power for a period of time, power supply to a secondary load needs to be cut off, to prolong power supply to a primary load. This operation is referred to as load low voltage disconnection, and a corresponding voltage is a load low voltage disconnection voltage. Battery low voltage disconnection (battery low voltage disconnection, BLVD): When a battery is discharged to a specific extent, the battery cannot continue to be discharged, and needs to be disconnected from all loads. This action is referred to as battery low voltage disconnection, and a corresponding voltage is a battery low voltage disconnection voltage.

It should be understood that, in some embodiments, the low-voltage alarm voltage, the LLVD, and the BLVD may have other names, but have a same meaning. Therefore, names having the same meaning as the foregoing terms in embodiments of this application may also be applied to this application.

For ease of understanding of embodiments of this application, the following descriptions are first provided before embodiments of this application are described.

In descriptions of embodiments of this application, "electrical connection" may be understood as a manner of direct electrical connection or indirect electrical connection between two electrical elements to implement signal transmission. For example, that A is electrically connected to B may be understood as that A is directly electrically connected to B, or may be understood as that A is indirectly electrically connected to B via one or more other electrical elements.

In the descriptions of embodiments of this application, unless otherwise specified, "and/or" describes only an association relationship between associated objects and indicates that three relationships may exist. For example, A and/or B may indicate the following three cases: Only A exists, both A and B exist, and only B exists.

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In addition, in the descriptions of embodiments of this application, "a plurality of" means two or more, and "at least one" and "one or more" mean one, two, or more.

The following describes technical solutions of this application with reference to accompanying drawings.

First, to facilitate understanding of a power module provided in embodiments of this application, the following first describes an application scenario of the power module.

The power module provided in this embodiment of this application may be used in a communication apparatus of a base station, to supply power to a load in the communication apparatus. The base station may be, for example, a base station in a communication system like an aggregation equipment room, a communication equipment room, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, a new radio (new radio, NR) system, or a wireless fidelity (wireless-fidelity, Wi-Fi) system.

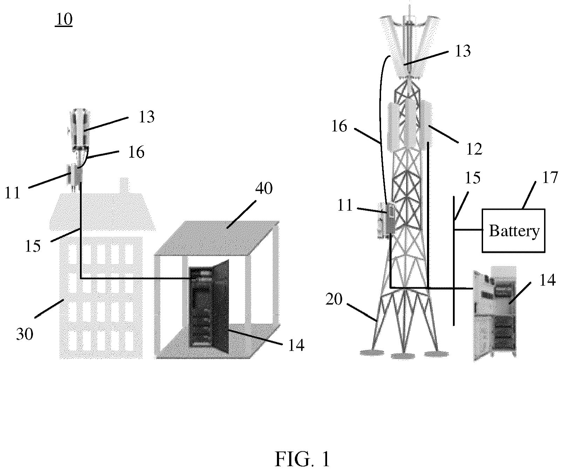

FIG. 1 is a diagram of a structure of a base station 10 in a 5G communication system according to an embodiment of this application.

As shown in FIG. 1, the base station 10 may include a baseband unit (BBU) (not shown in the figure), an RRU 11, an AAU 12, an antenna device 13, and a power supply apparatus 14.

The BBU may be separately connected to the RRU 11 and the AAU 12 through optical fibers. The BBU is a core device in the base station 10, and is mainly responsible for processing and modulating a digital signal and transmitting the processed digital signal to the RRU 11 and the AAU 12 through the optical fibers.

The RRU 11 may be electrically connected to the antenna device 13 through a feeder 16. The RRU 11 is mainly responsible for modulating the digital signal from the BBU into a radio frequency signal, amplifying the radio frequency signal, and transmitting the amplified radio frequency signal to the antenna device 13 through the feeder 16, and then the antenna device 13 transmits the radio frequency signal. Alternatively, the RRU 11 may further receive a radio frequency signal from the antenna device 13 through the feeder 16, demodulate the radio frequency signal, and then transmit the demodulated radio frequency signal to the BBU.

The RRU 11 generally includes an intermediate frequency unit, a TRU, a power amplifier unit, and a power unit. The intermediate frequency unit is configured to perform modulation and demodulation, digital up/down-conversion, and D/A conversion on the digital signal, so that the digital signal is converted into an intermediate frequency analog signal. The TRU is configured to convert the intermediate frequency analog signal into a radio frequency signal. The power amplifier unit is configured to amplify the radio frequency signal. The power unit is configured to supply power to the TRU and the power amplifier unit.

The AAU 12 may be formed by integrating the RRU 11 and a portion of the antenna device 13, and therefore has structures and functions of both the RRU 11 and the antenna device 13.

The power supply apparatus 14 may be connected to the BBU, the RRU 11, and the AAU 12 through a bus 15, to supply power to the BBU, the RRU 11, and the AAU 12. The power supply apparatus 14 may include an alternating current-direct current (alternating current-direct current, AC-DC) conversion apparatus, to convert an alternating current voltage (for example, 220 V mains) from a power grid into a negative direct current voltage, and then transmit the negative direct current voltage to the BBU, the RRU 11, and the AAU 12. Alternatively, the power supply apparatus 14 may include a direct current battery, to directly supply a negative direct current voltage to the BBU, the RRU 11, and the AAU 12. In addition, a battery 17 may also supply power to the BBU, the RRU 11, and the AAU 12 through the bus 15.

A rated voltage of the negative direct current voltage supplied by the power supply apparatus 14 to the BBU, the RRU 11, and the AAU 12 is usually -48 V, and may fluctuate within a voltage range of -34 V to -60 V. It may be understood that the negative direct current voltage supplied by the power supply apparatus 14 may be flexibly adjusted based on an actual production and design requirement. For example, a negative direct current voltage whose rated voltage is - 36 V or -60 V may be further supplied, and fluctuation within a specific range is allowed.

It should be understood that FIG. 1 is merely an example. In a possible example, the battery 17 and the power supply apparatus 14 may be an integrated apparatus. Therefore, in FIG. 1, only the power supply apparatus 14 is included, and the power supply apparatus 14 supplies power to the BBU, the RRU 11, and the AAU 12.

In actual use, as shown in FIG. 1, the base station 10 may be a distributed base station. The RRU 11, the AAU 12, and the antenna device 13 may be mounted on a tower top of a tower body 20. Alternatively, the RRU 11, the AAU 12, and the antenna device 13 may be mounted on a rooftop 30, a high mountain, or another high place. The BBU and the power supply apparatus 14 may be mounted on the tower top of the tower body 20 or in a remote equipment room 40. It may be understood that the structure of the base station 10 is merely an example. Based on different actual application scenarios, the base station 10 may include more or fewer communication apparatuses than the foregoing apparatuses. For example, the base station 10 may include only one of the RRU 11 and the AAU 12.

As described above, the battery 17 may also supply power to the BBU, the RRU 11, and the AAU 12 through the bus 15. Initially, lead-acid batteries are widely used in communication base stations due to long-term development and mature technologies. However, the lead-acid batteries have small capacity and short life. In a poor environment, a part of lead-acid batteries may actually output lower electric energy and have shorter actual service life. As a result, normal power consumption of a load in a power grid failure is affected.

In view of this, this application provides a power supply system. The power supply system includes a straight-through battery and a direct current-direct current (direct current-direct current, DC-DC) battery. When a power grid cannot supply power to a load due to a power grid exception, both the straight-through battery and the DC-DC battery can supply power to the load. In addition, compared with the straight-through battery, the DC-DC battery has better performance and longer life, and can ensure normal power consumption of the load in the power grid exception, thereby improving reliability of power consumption of the load in the power grid exception.

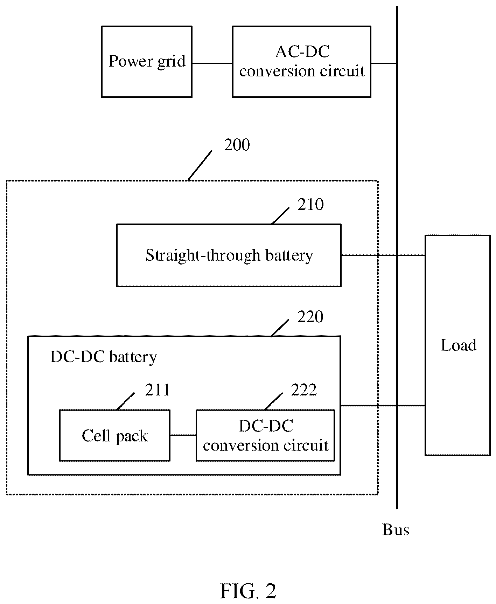

As shown in FIG. 2, a power supply system 200 includes a straight-through battery 210 and a DC-DC battery 220. The DC-DC battery 220 includes a cell pack 221 and a DC-DC conversion circuit 222. Both the straight-through battery 210 and the DC-DC battery 220 are configured to supply power to at least one load through a bus.

Under a condition that a voltage of the bus is less than a preset operating voltage, when a voltage of a direct current output by the straight-through battery 210 is greater than a voltage of a direct current output by the DC-DC battery 220, the straight-through battery 210 is configured to supply power to the at least one load; or when a voltage of a direct current output by the straight-through battery 210 is less than a voltage of a direct current output by the DC-DC battery 220, the DC-DC battery 220 is configured to supply power to the at least one load. The DC-DC conversion circuit 222 is configured to convert a voltage output by the cell pack 221, for the straight-through battery 210 and the DC-DC battery 220 to alternately supply power to the at least one load for a plurality of times.

In this embodiment of this application, when a power grid supplies power to the at least one load through the bus, an alternating current output by the power grid is input to an AC-DC conversion circuit, and the AC-DC conversion circuit converts the alternating current into a direct current, and then supplies power to the at least one load through the bus. In this case, the voltage of the bus is a voltage output by the AC-DC conversion circuit. When the voltage of the bus is less than the preset operating voltage, it indicates that the power grid is abnormal. In this case, to ensure continuous power consumption of the at least one load, the straight-through battery 210 or the DC-DC battery 220 in the power supply system 200 may release electric energy, to supply power to the at least one load, so as to implement continuous power consumption of the at least one load.

It should be understood that the preset operating voltage in this embodiment of this application is a voltage of the bus in a case in which the power grid supplies power to the at least one load through the bus. For example, it is assumed that the voltage of the bus in the case in which the power grid supplies power to the at least one load through the bus is 54 V. In this case, the preset operating voltage is 54 V. When the voltage of the bus is less than 54 V, it indicates that the power grid is abnormal. If the power grid continues to supply power to the at least one load, normal power consumption of the at least one load may be affected, and even the at least one load may be damaged. Therefore, when the voltage of the bus is less than the preset operating voltage, both the straight-through battery 210 and the DC-DC battery 220 can supply power to the at least one load, thereby ensuring normal power consumption of the at least one load in the power grid exception. In addition, because the DC-DC battery 220 has better performance and longer life, compared with a solution in which the straight-through battery 210 separately supplies power to the at least one load, in this application, the straight-through battery and the DC-DC battery are designed to alternately supply power to the at least one load. This can further ensure normal power consumption of the at least one load in the power grid exception, thereby improving reliability of power consumption of the at least one load in the power grid exception.

In addition, in this embodiment of this application, when the voltage of the bus is less than the preset operating voltage, the DC-DC conversion circuit 222 converts the voltage output by the cell pack 221, so that the straight-through battery 210 and the DC-DC battery 220 can be configured to alternately supply power to the at least one load for a plurality of times. In this way, compared with a solution in which one of the straight-through battery 210 and the DC-DC battery 220 is basically discharged completely and then the other battery supplies power to the at least one load in a power grid failure, in this application, the straight-through battery 210 and the DC-DC battery 220 are designed to alternately supply power to the at least one load for a plurality of times. This can avoid impact on performance and life of one of the straight-through battery 210 and the DC-DC battery 220 that is basically discharged completely, thereby improving performance of the straight-through battery 210 and the DC-DC battery 220 and prolonging service life of the straight-through battery 210 and the DC-DC battery 220.

Specifically, in an implementation, in the power grid failure, the straight-through battery 210 may supply power to the at least one load prior to the DC-DC battery 220. For example, in the power grid failure, the straight-through battery 210 first supplies power to the at least one load; after the straight-through battery 210 supplies power to the at least one load for a period of time, the DC-DC battery 220 supplies power to the at least one load; after the DC-DC battery 220 supplies power to the at least one load for a period of time, the straight-through battery 210 supplies power to the at least one load; after the straight-through battery 210 supplies power to the at least one load for a period of time, the DC-DC battery 220 supplies power to the at least one load; and this process is repeated. In this way, the straight-through battery 210 and the DC-DC battery 220 can alternately supply power to the at least one load for a plurality of times, to ensure continuous power supply to the at least one load, and further prevent electric energy of one of the straight-through battery 210 and the DC-DC battery 220 from being used up, so as to avoid impact on performance of the battery. This can prolong service life of the straight-through battery 210 and the DC-DC battery 220.

In another implementation, in the power grid failure, the DC-DC battery 220 may supply power to the at least one load prior to the straight-through battery 210. For example, in the power grid failure, the DC-DC battery 220 first supplies power to the at least one load; after the DC-DC battery 220 supplies power to the at least one load for a period of time, the straight-through battery 210 supplies power to the at least one load; after the straight-through battery 210 supplies power to the at least one load for a period of time, the DC-DC battery 220 supplies power to the at least one load; after the DC-DC battery 220 supplies power to the at least one load for a period of time, the straight-through battery 210 supplies power to the at least one load; and this process is repeated. In this way, the DC-DC battery 220 and the straight-through battery 210 can alternately supply power to the at least one load for a plurality of times, to ensure continuous power supply to the at least one load, and further prevent electric energy of one of the straight-through battery 210 and the DC-DC battery 220 from being used up, so as to avoid impact on performance of the battery. This can prolong service life of the straight-through battery 210 and the DC-DC battery 220.

It should be noted that, in this embodiment of this application, that the straight-through battery 210 supplies power to the at least one load may be understood as that a current of the direct current output by the straight-through battery 210 flows into the at least one load. In other words, when the current of the direct current output by the straight-through battery 210 flows into the at least one load, the at least one load can normally operate. That the DC-DC battery 220 supplies power to the at least one load may be understood as that a current of the direct current output by the DC-DC battery 220 flows into the at least one load. Similarly, when the current of the direct current output by the DC-DC battery 220 flows into the at least one load, the at least one load can normally operate.

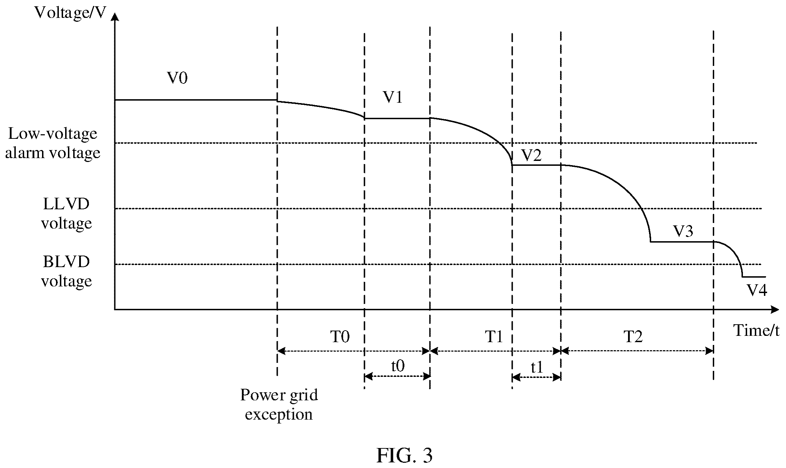

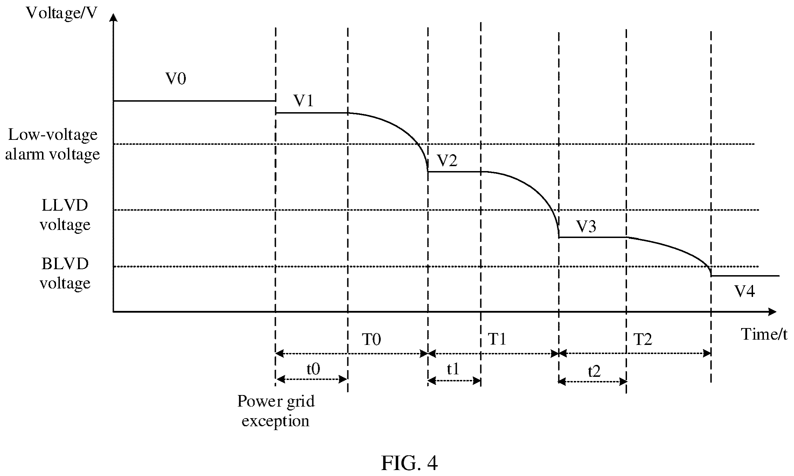

The following provides descriptions in different cases with reference to FIG. 3 and FIG. 4.

In an embodiment, an initial voltage of the direct current output by the straight-through battery 210 is greater than a first voltage corresponding to the direct current output by the DC-DC battery 220, and the straight-through battery 210 is configured to supply power to the at least one load. When the voltage of the direct current output by the straight-through battery 210 is equal to the first voltage, the DC-DC battery 220 is configured to output the direct current with the first voltage to supply power to the at least one load.

In this embodiment of this application, because the initial voltage of the direct current output by the straight-through battery 210 is greater than the first voltage corresponding to the direct current output by the DC-DC battery 220, when the voltage of the bus is less than the preset operating voltage, the straight-through battery 210 supplies power to the at least one load prior to the DC-DC battery 220. Specifically, refer to FIG. 3. For example, the initial voltage of the direct current output by the straight-through battery 210 is 52 V. In this case, the first voltage is less than 52 V. For example, the first voltage may be set to 50 V. In this way, when the voltage of the bus is less than the preset operating voltage, the straight-through battery 210 preferentially supplies power to the at least one load. As the straight-through battery 210 continuously supplies power to the at least one load, the voltage output by the straight-through battery 210 continuously decreases. When the voltage output by the straight-through battery 210 reaches 50 V, the DC-DC battery 220 starts to supply power to the at least one load at the first voltage of 50 V. The reason is that when the voltage output by the straight-through battery 210 reaches 50 V, the voltage of the direct current output by the straight-through battery 210 is equal to the voltage of the direct current output by the DC-DC battery 220, and when the voltage of the direct current output by the straight-through battery 210 is slightly less than the first voltage, the current of the direct current output by the DC-DC battery 220 flows into the at least one load, so that the DC-DC battery 220 starts to supply power to the at least one load. In this case, although the straight-through battery 210 outputs the direct current, the current of the direct current output by the straight-through battery 210 does not flow into the at least one load. Therefore, when the DC-DC battery 220 supplies power to the at least one load, the straight-through battery 210 does not supply power to the at least one load.

In this embodiment of this application, if the initial voltage of the direct current output by the straight-through battery 210 is greater than the first voltage corresponding to the direct current output by the DC-DC battery 220, when the voltage of the bus is less than the preset operating voltage, the straight-through battery 210 supplies power to the at least one load prior to the DC-DC battery 220, and when the voltage of the direct current output by the straight-through battery 210 reaches the first voltage, the DC-DC battery 220 starts to supply power to the at least one load at the first voltage, so that the straight-through battery and the DC-DC battery can alternately supply power to the at least one load. In addition, because the straight-through battery is discharged prior to the DC-DC battery, the straight-through battery can be discharged as much as possible. This can prolong service life of the DC-DC battery. In addition, in most cases, the power grid failure is merely temporary. In other words, the power grid may restore power supply to the at least one load in a short time period, that is, the power grid may restore power supply after the straight-through battery is discharged for a period of time. In this way, the DC-DC battery does not need to be discharged at the first voltage. This can prolong service life of the DC-DC battery.

In addition, in the design of this application, in the power grid failure, the straight-through battery 210 is discharged prior to the DC-DC battery 220, so that the straight-through battery 210 is preferentially discharged completely. After the straight-through battery 210 is discharged for a plurality of times, performance of the straight-through battery 210 deteriorates, and service life of the straight-through battery 210 is shortened. In this case, the straight-through battery 210 needs to be scrapped. In other words, the straight-through battery 210 is no longer used subsequently. In this way, in the subsequent power grid failure or insufficient power supply of the power grid, the DC-DC battery with better performance may be used to supply power to the at least one load. This improves reliability of supplying power to the at least one load by the power supply system.

In an embodiment, when the DC-DC battery 220 is discharged at the first voltage, and the DC-DC battery 220 meets a first preset condition, the DC-DC conversion circuit is configured to control the DC-DC battery 220 to output a second voltage that is less than the first voltage, and the straight-through battery 210 is configured to supply power to the at least one load. When the voltage of the direct current output by the straight-through battery 210 is equal to the second voltage, the DC-DC battery 220 is configured to output the direct current with the second voltage to supply power to the at least one load. The first preset condition includes at least one of the following: A depth of discharge of the DC-DC battery 220 reaches a first depth of discharge, remaining electric energy of the DC-DC battery 220 reaches first remaining electric energy, and discharge duration of the DC-DC battery 220 is first preset duration.

In this embodiment of this application, because the second voltage is less than the first voltage, when the DC-DC battery 220 is discharged at the first voltage, and the DC-DC battery meets the first preset condition, the straight-through battery 210 starts to supply power to the at least one load again. Specifically, still refer to FIG. 3. If the first voltage is 49.7 V, the second voltage may be set to a value less than 49.7 V. For example, the second voltage is set to 47.1 V. When the DC-DC battery is discharged at the first voltage, and the DC-DC battery 220 meets the first precondition, the DC-DC conversion circuit controls the DC-DC battery 220 to output the second voltage. Because the second voltage is less than the first voltage, to be specific, the voltage of the direct current output by the DC-DC battery is less than the voltage of the direct current output by the straight-through battery 210, that is, the voltage of the direct current output by the straight-through battery 210 is greater than the voltage of the direct current output by the DC-DC battery, the straight-through battery 210 starts to supply power to the at least one load. As the straight-through battery 210 continuously supplies power to the at least one load, the voltage output by the straight-through battery 210 continuously decreases. When the voltage output by the straight-through battery 210 reaches the second voltage of 47.1 V, the DC-DC battery 220 starts to supply power to the at least one load at the second voltage of 47.1 V. A specific reason is similar to that described above, and details are not described again.

The first preset condition may include at least one condition in the foregoing description. For example, the depth of discharge of the DC-DC battery 220 reaches the first depth of discharge. It is assumed that the first depth of discharge is 50%. When the DC-DC battery is discharged at the first voltage, and the depth of discharge of the DC-DC battery 220 is 50%, the DC-DC conversion circuit controls the DC-DC battery 220 to output the second voltage, so that the straight-through battery 210 starts to supply power to the at least one load.

In this embodiment of this application, when the DC-DC battery 220 is discharged at the first voltage, and the DC-DC battery 220 meets the first preset condition, the DC-DC conversion circuit is configured to control the DC-DC battery 220 to output the second voltage. Because the second voltage is less than the first voltage, the straight-through battery starts to supply power to the at least one load in this case. When the voltage of the direct current output by the straight-through battery is equal to the second voltage, the DC-DC battery 220 starts to supply power to the at least one load at the second voltage, so that the straight-through battery 210 and the DC-DC battery 220 can alternately supply power to the at least one load. In addition, because the straight-through battery is discharged prior to the DC-DC battery, the straight-through battery can be discharged as much as possible. This can prolong service life of the DC-DC battery. In addition, in most cases, the power grid failure is merely temporary. In other words, the power grid may restore power supply to the at least one load in a short time period, that is, the power grid may restore power supply after the straight-through battery is discharged for a period of time. In this way, the DC-DC battery does not need to be discharged at the second voltage. This can prolong service life of the DC-DC battery.

In addition, in the design of this application, after the DC-DC battery supplies the power to the at least one load at the first voltage for a period of time, the straight-through battery is discharged prior to the DC-DC battery, so that the straight-through battery is preferentially discharged completely. After the straight-through battery is discharged for a plurality of times, performance of the straight-through battery deteriorates, and service life of the straight-through battery is shortened. In this case, the straight-through battery needs to be scrapped. In other words, the straight-through battery is no longer used subsequently. In this way, in the subsequent power grid failure or insufficient power supply of the power grid, the DC-DC battery with better performance may be used to supply power to the at least one load. This improves reliability of supplying power to the at least one load by the power supply system.

In an embodiment, when the DC-DC battery 220 is discharged at the second voltage, and the DC-DC battery 220 meets a second preset condition, the DC-DC conversion circuit is configured to control the DC-DC battery 220 to output a third voltage that is less than the second voltage, and the straight-through battery 210 is configured to supply power to the at least one load. When the voltage of the direct current output by the straight-through battery 210 is equal to the third voltage, the DC-DC battery 220 is configured to output the direct current with the third voltage to supply power to the at least one load. The second preset condition includes at least one of the following: The depth of discharge of the DC-DC battery 220 reaches a second depth of discharge, the remaining electric energy of the DC-DC battery 220 reaches second remaining electric energy, and the discharge duration of the DC-DC battery 220 reaches second preset duration, where the second depth of discharge is greater than the first depth of discharge, and the second remaining electric energy is less than the first remaining electric energy.

In this embodiment of this application, because the third voltage is less than the second voltage, when the DC-DC battery 220 is discharged at the second voltage, and the DC-DC battery meets the second preset condition, the straight-through battery 210 starts to supply power to the at least one load again. Specifically, still refer to FIG. 3. It is assumed that the second voltage is 47.1 V. In this case, the third voltage may be set to a value less than 47.1 V. For example, the third voltage may be set to 44.8 V. In this way, when the DC-DC battery 220 is discharged at the second voltage, and the DC-DC battery 220 meets the second preset condition, the DC-DC conversion circuit is configured to control the DC-DC battery 220 to output the third voltage. Because the third voltage is less than the second voltage, to be specific, the voltage of the direct current output by the DC-DC battery is less than the voltage of the direct current output by the straight-through battery 210, that is, the voltage of the direct current output by the straight-through battery 210 is greater than the voltage of the direct current output by the DC-DC battery, the straight-through battery 210 starts to supply power to the at least one load. As the straight-through battery 210 continuously supplies power to the at least one load, the voltage output by the straight-through battery 210 continuously decreases. When the voltage output by the straight-through battery 210 reaches 44.8 V, the DC-DC battery 220 starts to supply power to the at least one load at the third voltage of 44.8 V.

The second preset condition includes at least one condition in the foregoing description. For example, the depth of discharge of the DC-DC battery 220 reaches the second depth of discharge. It is assumed that the second depth of discharge is 80%. When the DC-DC battery 220 is discharged at the second voltage, and the depth of discharge of the DC-DC battery 220 is 80%, the DC-DC conversion circuit controls the DC-DC battery 220 to output the third voltage, so that the straight-through battery 210 starts to supply power to the at least one load.

In this embodiment of this application, when the DC-DC battery 220 is discharged at the second voltage, and the DC-DC battery 220 meets the second preset condition, the DC-DC conversion circuit is configured to control the DC-DC battery 220 to output the third voltage. Because the third voltage is less than the second voltage, the straight-through battery starts to supply power to the at least one load in this case. When the voltage of the direct current output by the straight-through battery is equal to the third voltage, the DC-DC battery 220 starts to supply power to the at least one load at the third voltage, so that the straight-through battery and the DC-DC battery can alternately supply power to the at least one load. In addition, because the straight-through battery is discharged prior to the DC-DC battery, the straight-through battery can be discharged as much as possible. This can prolong service life of the DC-DC battery. In addition, in most cases, the power grid failure is merely temporary. In other words, the power grid may restore power supply to the at least one load in a short time period, that is, the power grid may restore power supply after the straight-through battery is discharged for a period of time. In this way, the DC-DC battery does not need to be discharged at the third voltage. This can prolong service life of the DC-DC battery.

In addition, in the design of this application, after the DC-DC battery supplies the power to the at least one load at the second voltage for a period of time, the straight-through battery is discharged prior to the DC-DC battery, so that the straight-through battery is preferentially discharged completely. After the straight-through battery is discharged for a plurality of times, performance of the straight-through battery deteriorates, and service life of the straight-through battery is shortened. In this case, the straight-through battery needs to be scrapped. In other words, the straight-through battery is no longer used subsequently. In this way, in the subsequent power grid failure or insufficient power supply of the power grid, the DC-DC battery with better performance may be used to supply power to the at least one load. This improves reliability of supplying power to the at least one load by the power supply system.

In an embodiment, when the DC-DC battery 220 is discharged at the third voltage, and the DC-DC battery 220 meets a third preset condition, the DC-DC conversion circuit is configured to control the DC-DC battery 220 to output a fourth voltage that is less than the third voltage, and the straight-through battery 210 is configured to supply power to the at least one load. The third preset condition includes at least one of the following: The depth of discharge of the DC-DC battery 220 reaches a third depth of discharge, the remaining electric energy of the DC-DC battery 220 reaches third remaining electric energy, and the DC-DC battery 220 is discharged at the third voltage for third preset duration, where the third depth of discharge is greater than the second depth of discharge, and the third remaining electric energy is less than the second remaining electric energy. When the voltage of the direct current output by the straight-through battery 210 is equal to the fourth voltage, the DC-DC battery 220 is configured to output the direct current with the fourth voltage to supply power to the at least one load.

In this embodiment of this application, because the fourth voltage is less than the third voltage, when the DC-DC battery 220 is discharged at the third voltage, and the DC-DC battery meets the third preset condition, the straight-through battery 210 starts to supply power to the at least one load again. Specifically, still refer to FIG. 3. It is assumed that the third voltage is 44.8 V, the third voltage may be set to a value less than 44.8 V. For example, the third voltage may be set to 42 V. In this way, when the DC-DC battery 220 is discharged at the third voltage, and the DC-DC battery 220 meets the third preset condition, the DC-DC conversion circuit is configured to control the DC-DC battery 220 to output the fourth voltage. Because the fourth voltage is less than the third voltage, to be specific, the voltage of the direct current output by the DC-DC battery is less than the voltage of the direct current output by the straight-through battery 210, that is, the voltage of the direct current output by the straight-through battery 210 is greater than the voltage of the direct current output by the DC-DC battery, the straight-through battery 210 starts to supply power to the at least one load. As the straight-through battery 210 continuously supplies power to the at least one load, the voltage output by the straight-through battery 210 continuously decreases. When the voltage output by the straight-through battery 210 reaches 42 V, the DC-DC battery 220 starts to supply power to the at least one load at the third voltage of 42 V.

The third preset condition includes at least one condition in the foregoing description. For example, the depth of discharge of the DC-DC battery 220 reaches the third depth of discharge. It is assumed that the third depth of discharge is 98%. When the DC-DC battery 220 is discharged at the third voltage, and the depth of discharge of the DC-DC battery 220 is 98%, the DC-DC conversion circuit controls the DC-DC battery 220 to output the fourth voltage, so that the straight-through battery 210 starts to supply power to the at least one load.

In this embodiment of this application, when the DC-DC battery 220 is discharged at the third voltage, and the DC-DC battery 220 meets the third preset condition, the DC-DC conversion circuit is configured to control the DC-DC battery 220 to output the fourth voltage. Because the fourth voltage is less than the third voltage, the straight-through battery starts to supply power to the at least one load in this case. When the voltage of the direct current output by the straight-through battery is equal to the fourth voltage, the DC-DC battery 220 starts to supply power to the at least one load at the fourth voltage, so that the straight-through battery and the DC-DC battery can alternately supply power to the at least one load. In addition, because the straight-through battery is discharged prior to the DC-DC battery, the straight-through battery can be discharged as much as possible. This can prolong service life of the DC-DC battery. In addition, in most cases, the power grid failure is merely temporary. In other words, the power grid may restore power supply to the at least one load in a short time period, that is, the power grid may restore power supply after the straight-through battery is discharged for a period of time. In this way, the DC-DC battery does not need to be discharged at the fourth voltage. This can prolong service life of the DC-DC battery.

In addition, in the design of this application, after the DC-DC battery supplies the power to the at least one load at the third voltage for a period of time, the straight-through battery is discharged prior to the DC-DC battery, so that the straight-through battery is preferentially discharged completely. After the straight-through battery is discharged for a plurality of times, performance of the straight-through battery deteriorates, and service life of the straight-through battery is shortened. In this case, the straight-through battery needs to be scrapped. In other words, the straight-through battery is no longer used subsequently. In this way, in the subsequent power grid failure or insufficient power supply of the power grid, the DC-DC battery with better performance may be used to supply power to the at least one load. This improves reliability of supplying power to the at least one load by the power supply system.

It should be understood that FIG. 3 shows an example in which the straight-through battery 210 and the DC-DC battery 220 are fully charged in the power grid failure. In some examples, the straight-through battery 210 or the DC-DC battery 220 may not be fully charged in the power grid failure. In this example, when the voltage of the bus is less than the preset operating voltage, the straight-through battery 210 may directly enter a second discharge phase, namely, a discharge phase T1 shown in the figure. In this case, when the voltage of the direct current output by the straight-through battery 210 reaches the second voltage V2, the DC-DC battery 220 starts to supply power to the at least one load at the second voltage.

With reference to FIG. 4, the following describes a specific process in which the DC-DC battery 220 supplies power to the at least one load prior to the straight-through battery 210 in the power grid failure.

In an embodiment, a first voltage corresponding to the direct current output by the DC-DC battery 220 is greater than an initial voltage of the direct current output by the straight-through battery 210, and the DC-DC battery 220 is configured to output the direct current with the first voltage to supply power to the at least one load. When the DC-DC battery 220 is discharged at the first voltage, and the DC-DC battery 220 meets a first preset condition, the DC-DC conversion circuit is configured to control the DC-DC battery 220 to output a second voltage that is less than the initial voltage of the straight-through battery 210, and the straight-through battery 210 is configured to supply power to the at least one load. The first preset condition includes at least one of the following: A depth of discharge of the DC-DC battery 220 reaches a first depth of discharge, remaining electric energy of the DC-DC battery 220 reaches first remaining electric energy, and discharge duration of the DC-DC battery 220 is first preset duration.

In this embodiment of this application, because the first voltage corresponding to the direct current output by the DC-DC battery 220 is greater than the initial voltage of the direct current output by the straight-through battery 210, when the voltage of the bus is less than the preset operating voltage, the DC-DC battery 220 supplies power to the at least one load prior to the straight-through battery 210. Specifically, refer to FIG. 4. For example, an initial discharge voltage of the straight-through battery 210 is 52 V. In this case, the first voltage may be set to a value greater than 52 V. For example, the first voltage may be set to 52.2 V. In this way, when the voltage of the bus is less than the preset operating voltage, the DC-DC battery 220 preferentially supplies power to the at least one load. When the DC-DC battery 220 meets the first preset condition, the DC-DC conversion circuit controls the DC-DC battery 220 to output the second voltage. Because the second voltage is less than the first voltage, for example, the second voltage may be set to 48.3 V, the voltage of the direct current output by the straight-through battery 210 is greater than the voltage of the direct current output by the DC-DC battery, so that the straight-through battery 210 starts to supply power to the at least one load. In this way, the DC-DC battery 220 can be discharged prior to the straight-through battery 210 in the power grid failure.

Similarly, the first preset condition includes at least one condition in the foregoing description. For example, the depth of discharge of the DC-DC battery 220 reaches the first depth of discharge. It is assumed that the first depth of discharge is 50%. When the DC-DC battery is discharged at the first voltage, and the depth of discharge of the DC-DC battery 220 is 50%, the DC-DC conversion circuit controls the DC-DC battery 220 to output the second voltage, so that the straight-through battery 210 starts to supply power to the at least one load.

In this embodiment of this application, when the voltage of the bus is less than the preset operating voltage, the first voltage corresponding to the direct current output by the DC-DC battery 220 is greater than the initial voltage of the direct current output by the straight-through battery. In this case, the DC-DC battery supplies power to the at least one load prior to the straight-through battery, and the DC-DC battery is discharged as much as possible. This prolongs service life of the straight-through battery. In addition, in most cases, the power grid may restore power supply in a short time period after the failure. In this case, the power grid may restore power supply after the DC-DC battery is discharged for a period of time. In this way, the straight-through battery does not need to be discharged. This can prolong service life of the straight-through battery.

In an embodiment, when the voltage of the direct current output by the straight-through battery 210 reaches the second voltage, the DC-DC battery 220 is configured to output the direct current with the second voltage to supply power to the at least one load. When the DC-DC battery 220 is discharged at the second voltage, and the DC-DC battery meets a second preset condition, the DC-DC conversion circuit is configured to control the DC-DC battery to output a third voltage that is less than the second voltage, and the straight-through battery is configured to supply power to the at least one load. The second preset condition includes at least one of the following: The depth of discharge of the DC-DC battery 220 reaches a second depth of discharge, the remaining electric energy of the DC-DC battery 220 reaches second remaining electric energy, and the discharge duration of the DC-DC battery 220 reaches second preset duration, where the second depth of discharge is greater than the first depth of discharge, and the second remaining electric energy is less than the first remaining electric energy.

In this embodiment of this application, refer to FIG. 4 above. If the second voltage is 48.3 V, as a discharge process of the straight-through battery 210 continues, the voltage of the direct current output by the straight-through battery 210 gradually decreases. When the voltage of the direct current output by the straight-through battery 210 reaches the second voltage of 48.3 V, the DC-DC battery 220 starts to supply power to the at least one load at the second voltage. When the DC-DC battery 220 is discharged at the second voltage, and the DC-DC battery 220 meets the second preset condition, the DC-DC conversion circuit is configured to control the DC-DC battery 220 to output the third voltage. Because the third voltage is less than the second voltage, to be specific, the voltage of the direct current output by the DC-DC battery is less than the voltage of the direct current output by the straight-through battery 210, that is, the voltage of the direct current output by the straight-through battery 210 is greater than the voltage of the direct current output by the DC-DC battery, the straight-through battery 210 starts to supply power to the at least one load. In this way, the straight-through battery and the DC-DC battery can be alternately discharged. In addition, when the voltage of the direct current output by the straight-through battery is equal to the second voltage, the DC-DC battery supplies power to the at least one load prior to the straight-through battery, and the DC-DC battery is discharged as much as possible. This prolongs service life of the straight-through battery.

In an embodiment, when the voltage of the direct current output by the straight-through battery 210 is equal to the third voltage, the DC-DC battery 220 is configured to output the direct current with the third voltage to supply power to the at least one load. When the DC-DC battery 220 is discharged at the third voltage, and the DC-DC battery meets a third preset condition, the DC-DC conversion circuit is configured to control the DC-DC battery to output a fourth voltage that is less than the third voltage, and the straight-through battery 210 is configured to supply power to the at least one load. The third preset condition includes at least one of the following: The depth of discharge of the DC-DC battery reaches a third depth of discharge, the remaining electric energy of the DC-DC battery 220 reaches third remaining electric energy, and the discharge duration of the DC-DC battery reaches third preset duration, where the third depth of discharge is greater than the second depth of discharge, and the third remaining electric energy is less than the second remaining electric energy.

In this embodiment of this application, still refer to FIG. 4. If the third voltage is 46.1 V, as the discharge process of the straight-through battery 210 continues, the voltage of the direct current output by the straight-through battery 210 gradually decreases. When the voltage of the direct current output by the straight-through battery 210 reaches the third voltage of 46.1 V, the DC-DC battery 220 starts to supply power to the at least one load at the third voltage. When the DC-DC battery 220 is discharged at the third voltage, and the DC-DC battery 220 meets the third preset condition, the DC-DC conversion circuit is configured to control the DC-DC battery 220 to output the fourth voltage. Because the fourth voltage is less than the third voltage, to be specific, the voltage of the direct current output by the DC-DC battery is less than the voltage of the direct current output by the straight-through battery 210, that is, the voltage of the direct current output by the straight-through battery 210 is greater than the voltage of the direct current output by the DC-DC battery, the straight-through battery 210 starts to supply power to the at least one load. In this way, the straight-through battery and the DC-DC battery can be alternately discharged. In addition, when the voltage of the direct current output by the straight-through battery is equal to the third voltage, the DC-DC battery supplies power to the at least one load prior to the straight-through battery, and the DC-DC battery is discharged as much as possible. This prolongs service life of the straight-through battery.

It should be noted that, in FIG. **4****,** for example, the first voltage V1 is greater than the initial discharge voltage of the straight-through battery 210. In some examples, the first voltage V1 is slightly less than the initial discharge voltage of the straight-through battery 210. In this way, when the voltage of the bus is less than the preset operating voltage, the straight-through battery 210 is first discharged for a short period of time, for example, several seconds or dozens of milliseconds. When the voltage of the direct current output by the straight-through battery 210 reaches the first voltage V1, the DC-DC battery 220 starts to supply power to the at least one load at the first voltage. When the DC-DC battery reaches the first preset condition, the straight-through battery starts to supply power to the at least one load. It should be further noted that FIG. 4 shows an example in which the straight-through battery 210 and the DC-DC battery 220 are fully charged in the power grid failure. In some examples, the straight-through battery 210 or the DC-DC battery 220 may not be fully charged in the power grid failure. In this example, when the voltage of the bus is less than the preset operating voltage, the DC-DC battery 220 may directly supply power to the at least one load at the second voltage V2, that is, a discharge phase T1 shown in the figure. In this case, when the DC-DC battery 220 supplies power to the at least one load at the second voltage for t1, the straight-through battery 210 starts to supply power to the at least one load.

Based on this, the foregoing describes the specific process in which the straight-through battery 210 and the DC-DC battery alternately supply power to the at least one load when the voltage of the bus is less than the preset operating voltage. The following describes relationships between each of the foregoing voltages and related parameters set in the power supply system.

In an embodiment, the first voltage is greater than a preset alarm voltage, and the preset alarm voltage indicates the power supply system to generate an instruction for indicating a low-voltage alarm for the straight-through battery 210 or the DC-DC battery 220.

In this embodiment of this application, FIG. 3 is used as an example. It is assumed that the preset low-voltage alarm voltage is 48.5 V. In this case, the first voltage V1 may be set to a voltage greater than 48.5 V. For example, the first voltage may be set to 49.7 V. When the voltage of the bus is less than the preset operating voltage, the straight-through battery 210 preferentially supplies power to the at least one load. As the straight-through battery 210 continuously supplies power to the at least one load, the voltage output by the straight-through battery 210 continuously decreases. When the voltage output by the straight-through battery 210 reaches 49.7 V, the DC-DC battery 220 starts to supply power to the at least one load at the first voltage of 49.7 V. In this discharge process, the voltages of the direct currents output by the straight-through battery 210 and the DC-DC battery 220 are always greater than the preset low-voltage alarm voltage. Therefore, the power supply system does not generate the alarm instruction. This can avoid a case in which the power grid fails temporarily, but the power supply system has generated the alarm instruction, thereby avoiding a waste of maintenance resources.

It should be understood that, in some possible implementations, the first voltage may alternatively be equal to the preset low-voltage alarm voltage, or the first voltage may alternatively be less than the preset low-voltage alarm voltage.

For example, the first voltage is equal to the preset low-voltage alarm voltage. It is assumed that the preset low-voltage alarm voltage is 48.5 V. In this case, the first voltage V1 may be set to 48.5 V. When the voltage of the bus is less than the preset operating voltage, the straight-through battery 210 preferentially supplies power to the at least one load. As the straight-through battery 210 continuously supplies power to the at least one load, the voltage output by the straight-through battery 210 continuously decreases. When the voltage output by the straight-through battery 210 reaches 48.5 V, the DC-DC battery 220 starts to supply power to the at least one load at the first voltage of 48.5 V. In this discharge process, the voltages of the direct currents output by the straight-through battery 210 and the DC-DC battery 220 reach the preset low-voltage alarm voltage. Therefore, the power supply system generates the alarm instruction, to notify maintenance personnel to repair the power grid as soon as possible.

In an embodiment, the second voltage is less than the preset alarm voltage, and the preset alarm voltage indicates the power supply system to generate the instruction for indicating the low-voltage alarm for the straight-through battery 210 or the DC-DC battery 220.

The power supply system is configured to: when the straight-through battery 210 or the DC-DC battery 220 supplies power to the at least one load at the second voltage, generate the instruction for indicating the low-voltage alarm for the straight-through battery 210 or the DC-DC battery 220.

In this embodiment of this application, the second voltage is designed to be less than the preset low-voltage alarm voltage, to notify the maintenance personnel to maintain the power grid as soon as possible. FIG. 3 is still used as an example. It is assumed that the preset low-voltage alarm voltage is 48.5 V. In this case, the second voltage may be set to be less than 48.5 V. For example, the second voltage may be set to 47.1 V. In this way, in the process in which the DC-DC battery 220 starts to supply power to the at least one load at the second voltage of 47.1 V when the voltage output by the straight-through battery 210 reaches the second voltage of 47.1 V, the voltages of the direct currents output by the straight-through battery 210 and the DC-DC battery 220 reach the preset alarm voltage, and the power supply system generates the instruction for indicating the low-voltage alarm for the straight-through battery 210 or the DC-DC battery 220, to notify the maintenance personnel to repair the power grid as soon as possible. This can avoid a case in which the power supply system does not generate the alarm instruction in time when the straight-through battery 210 and the DC-DC battery 220 alternately supply power to the at least one load, thereby improving service performance of the straight-through battery and the DC-DC battery and prolonging life of the straight-through battery and the DC-DC battery.

In addition, in an example, in this application, the second voltage may be further designed to be greater than a preset LLVD voltage. In this way, in the process in which the DC-DC battery 220 starts to supply the power to the at least one load at the second voltage of 47.1 V when the voltage output by the straight-through battery 210 reaches the second voltage of 47.1 V, because the voltages of the direct currents output by the straight-through battery 210 and the DC-DC battery 220 are always greater than the preset LLVD voltage, the power supply system does not disconnect a part of loads from the bus. This can prevent the power supply system from prematurely disconnecting a part of loads from the bus to avoid impact on power supply to the part of loads, thereby ensuring reliability of supplying power by the power supply system to all loads connected to the bus before the power grid fails.

In an embodiment, the third voltage is less than the preset LLVD voltage, and the preset LLVD voltage indicates the power supply system to disconnect a part of loads from the bus.

The power supply system is configured to: disconnect the part of loads from the bus when the straight-through battery 210 or the DC-DC battery 220 supplies power to the at least one load at the third voltage.

In this embodiment of this application, the third voltage is designed to be less than the preset LLVD voltage, to disconnect a part of loads from the bus, so as to prolong duration for power supply to the remaining load. Still refer to FIG. 3. It is assumed that the preset LLVD voltage is 47 V. In this case, the third voltage may be designed to be 44 V. In this way, in the process in which the DC-DC battery 220 starts to supply power to the at least one load at the third voltage of 44 V when the voltage output by the straight-through battery 210 reaches the third voltage of 44 V, when the voltage of the direct current output by the straight-through battery 210 reaches the preset LLVD voltage of 47 V, the power supply system may disconnect a part of loads from the bus, for the straight-through battery 210 to supply power to the remaining load; and when the voltage of the direct current output by the straight-through battery 210 reaches the third voltage of 44 V, the DC-DC battery supplies power to the remaining load at the third voltage of 44 V. This can prolong duration in which the power supply system supplies power to the remaining load.

For example, it is assumed that the at least one load in the foregoing embodiment includes a load 1, a load 2, and a load 3, power of the three loads is respectively 100 kW, 10 kW, and 1 kW, and power supply to the load 2 and the load 3 is prior to power supply to the load 1. When the straight-through battery 210 or the DC-DC battery outputs the direct current with the third voltage, if the third voltage is greater than the preset LLVD voltage, the power supply system does not disconnect a part of loads from the bus. In this case, the power supply system needs to supply power to all of the load 1, the load 2, and the load 3. However, remaining discharge capacity of the straight-through battery 210 or the DC-DC battery 220 is limited. Consequently, duration for power supply to the load 2 and the load 3 is shortened. Therefore, in this application, the third voltage is designed to be less than the preset LLVD voltage. When the voltage output by the straight-through battery 210 or the DC-DC battery 220 reaches the third voltage of 44 V, because the third voltage is less than the preset LLVD voltage, the power supply system disconnects a part of loads from the bus. For example, the power supply system may first disconnect the load 1 from the bus. In this case, the power supply system supplies power only to the load 2 and the load 3, and discharge power of the straight-through battery 210 or the DC-DC battery 220 decreases. This can prolong duration in which the power supply system supplies power to the load 2 and the load 3.

In addition, in an example, in this application, the third voltage may be further designed to be greater than a preset BLVD voltage. In this way, in the process in which the DC-DC battery 220 starts to supply the power to the at least one load at the third voltage of 47.1 V when the voltage output by the straight-through battery 210 reaches the third voltage of 47.1 V, because the voltages of the direct currents output by the straight-through battery 210 and the DC-DC battery 220 are always greater than the preset BLVD voltage, the power supply system does not disconnect all the loads from the bus. This can prevent the power supply system from prematurely disconnecting all the loads from the bus to avoid impact on power supply to the loads, thereby ensuring reliability of supplying power to the remaining load by the power supply system.

In an embodiment, the fourth voltage is less than the preset BLVD voltage, and the preset BLVD voltage indicates the power supply system to control the straight-through battery 210 or the DC-DC battery 220 to stop outputting the direct current.

The power supply system is configured to: when the voltage of the direct current output by the straight-through battery 210 or the DC-DC battery 220 reaches the fourth voltage, control the straight-through battery 210 or the DC-DC battery 220 to stop outputting the direct current.

In this embodiment of this application, the fourth voltage is designed to be less than the preset BLVD voltage. This can prolong life of the straight-through battery 210 or the DC-DC battery 220. Still refer to FIG. 3. When the DC-DC battery 220 supplies the power to the at least one load at the third voltage for a period of time, the DC-DC conversion circuit controls the DC-DC battery to output the direct current with the fourth voltage. Because the fourth voltage is less than the third voltage, the straight-through battery 210 starts to supply power to the at least one load. As the straight-through battery 210 continuously supplies power to the at least one load, the voltage of the direct current output by the straight-through battery 210 continuously decreases. When the voltage of the direct current output by the straight-through battery 210 reaches the preset BLVD voltage, the power supply system disconnects the at least one load from the bus. Therefore, the power supply system stops supplying the power to the at least one load. This can reduce the depth of discharge of the straight-through battery 210 or the DC-DC battery 220, thereby prolonging life of the straight-through battery 210 or the DC-DC battery 220.

In an embodiment, the first voltage is less than a direct current voltage of the bus in a case in which the power grid connected to the bus supplies power to the at least one load.

In this embodiment of this application, the first voltage is less than the direct current voltage of the bus in the case in which the power grid supplies the power to the at least one load. This helps distinguish between source voltages for power supply to the at least one load, thereby helping the maintenance personnel accurately determine whether power supply of the power grid is restored. Specifically, it is assumed that a voltage at which the power grid supplies power to the at least one load is 54 V. The first voltage may be designed to be 51.5 V. When the voltage of the bus is 51.5 V, it indicates that power supply of the power grid is not restored at this moment, and the DC-DC battery supplies power to the at least one load. When the voltage of the bus is 54 V, it indicates that power supply of the power grid is restored at this moment, and the power grid supplies power to the at least one load.

In an embodiment, the power supply system is configured to disconnect, from the bus each time the straight-through battery 210 replaces the DC-DC battery 220 to supply power to the at least one load, or each time the DC-DC battery 220 replaces the straight-through battery 210 to supply power to the at least one load, a part of loads currently connected to the bus.

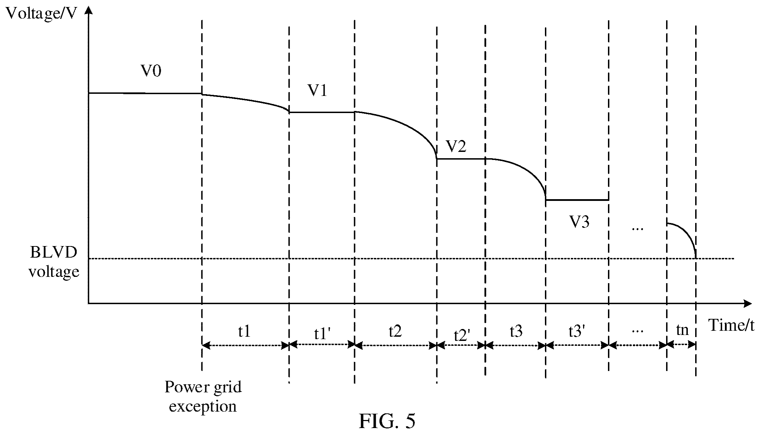

Refer to FIG. 5. A BLVD voltage shown in the figure is the preset BLVD voltage, for example, the voltage of 42 V in the foregoing embodiment. It is assumed that the at least one load includes a load 1, a load 2, a load 3, a load 4, a load 5, and a load 6. In a normal case, when the power grid supplies power to the at least one load, a voltage of a direct current at which the power grid supplies power to the at least one load is V0, and V0 may be, for example, 54 V. When the power grid is abnormal, the straight-through battery 210 may supply power to the six loads. After the straight-through battery 210 supplies power to the loads for duration t1, the DC-DC battery 220 supplies power to the loads at the voltage V1. In addition, when the DC-DC battery 220 replaces the straight-through battery 210 to supply power to the loads, the power supply system disconnects a part of the loads from the bus, for example, disconnects the load 1 from the bus. In this way, the DC-DC battery 220 supplies power to the remaining five loads at the voltage V1. In other words, the DC-DC battery 220 supplies power to the load 2, the load 3, the load 4, the load 5, and the load 6 at the voltage V1.

After the DC-DC battery 220 supplies the power to the five loads for duration tl', the straight-through battery 210 starts to supply power to the loads. In addition, when the straight-through battery 210 replaces the DC-DC battery 220 to supply power to the loads, the power supply system disconnects a part of the loads from the bus again, for example, disconnects the load 2 from the bus. In this way, the straight-through battery supplies power to the remaining four loads within the duration t2. In other words, the straight-through battery supplies power to the load 3, the load 4, the load 5, and the load 6 within the duration t2.

The foregoing process is repeated until the straight-through battery 210 or the DC-DC battery 220 is basically discharged completely, and the power supply system disconnects all the loads from the bus. This can prolong duration in which the straight-through battery 210 and the DC-DC battery 220 supply power to the remaining load connected to the bus.

In this embodiment of this application, each time the straight-through battery replaces the DC-DC battery to supply power to the at least one load, or each time the DC-DC battery replaces the straight-through battery to supply power to the at least one load, the power supply system may disconnect, from the bus, a part of loads currently connected to the bus. This can as much as possible prolong duration in which the power supply system supplies power to the remaining load, and can as much as possible ensure reliability of supplying power to the remaining load by the power supply system.

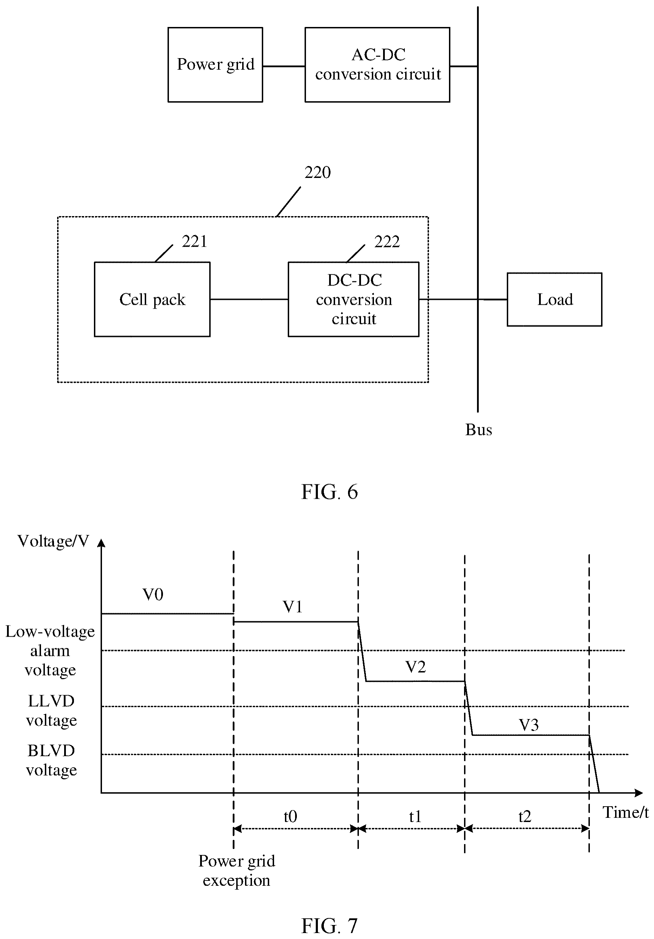

In addition, this application further provides a DC-DC battery 220. As shown in FIG. 6, the DC-DC battery includes a cell pack 221 and a DC-DC conversion circuit 222. The DC-DC conversion circuit 222 is configured to convert a voltage output by the cell pack, and output a voltage after the conversion to at least one load through a bus.

In this embodiment of this application, the cell pack 221 inputs a voltage to the DC-DC conversion circuit 222, and the voltage input by the cell pack 221 to the DC-DC conversion circuit changes with capacity of the cell pack 221. The DC-DC conversion circuit 222 may convert the voltage output by the cell pack 221, so that the DC-DC battery supplies power to the at least one load at the voltage after the conversion of the DC-DC conversion circuit 222.

The DC-DC conversion circuit 222 is configured to: when a voltage of an output port of the DC-DC battery is less than a preset operating voltage, convert the voltage output by the cell pack into a first voltage; and when the DC-DC battery 220 meets a first preset condition, convert the voltage output by the cell pack 221 into a second voltage, where the second voltage is less than the first voltage. The first preset condition includes at least one of the following: A depth of discharge of the DC-DC battery 220 reaches a first depth of discharge, remaining electric energy of the DC-DC battery 220 reaches first remaining electric energy, and discharge duration of the DC-DC battery 220 is first preset duration.

In this embodiment of this application, in a process in which a power grid normally supplies power to the at least one load, because the DC-DC battery 220 is connected to the bus, the voltage of the output port of the DC-DC battery 220 is a voltage of the bus, namely, the foregoing preset operating voltage. It is assumed that the preset operating voltage is 51.5 V. When the voltage of the output port of the DC-DC battery 220 decreases, in other words, the voltage of the bus decreases, it indicates that the power grid fails at this moment, that is, the power grid cannot supply power to the at least one load. Therefore, when the voltage of the output port of the DC-DC battery is less than the preset operating voltage, the DC-DC battery 220 supplies power to the at least one load, to ensure continuous power consumption of the at least one load. The DC-DC conversion circuit 222 may convert the voltage output by the cell pack 221 into the first voltage, so that the DC-DC battery 220 supplies power to the at least one load at the first voltage. When the DC-DC battery 220 is discharged at the first voltage, and the DC-DC battery 220 meets the first preset condition, the DC-DC conversion circuit 222 converts the voltage output by the cell pack 221 into the second voltage. Because the second voltage is less than the first voltage, overdischarge of the DC-DC battery 220 can be avoided. This can improve performance of the DC-DC battery 220 and prolong service life of the DC-DC battery 220.

In some examples, the first voltage may be set to be greater than a preset low-voltage alarm voltage, to avoid a case in which the power grid fails temporarily, but the power supply system generates an alarm instruction. Specifically, the first voltage is greater than the preset alarm voltage. For example, the preset alarm voltage is 48.5 V. The first voltage may be set to a value greater than 48.5 V. It is assumed that the first voltage is set to 51 V. In this case, when the DC-DC battery 220 supplies power to the at least one load at the first voltage, because the first voltage corresponding to a direct current output by the DC-DC battery 220 is always greater than the preset alarm voltage, the power supply system does not generate the alarm instruction when the DC-DC battery 220 supplies power to the at least one load at the first voltage. This can avoid a case in which the power grid fails temporarily, but the power supply system has generated the alarm instruction, thereby avoiding a waste of maintenance resources.

In some other examples, the second voltage may be set to be less than the preset low-voltage alarm voltage, to notify maintenance personnel to repair the power grid as soon as possible. Specifically, it is still assumed that the preset low-voltage alarm voltage is 48.5 V. The second voltage may be designed to be 48 V. When the DC-DC conversion circuit 222 converts the voltage output by the cell pack 221 into the second voltage of 48 V, it indicates that remaining discharge capacity of the DC-DC battery 220 is small at this moment. If the power supply system no longer generates the alarm instruction, subsequent normal discharge of the DC-DC battery 220 is affected, seriously, performance of the DC-DC battery may deteriorate, and life of the DC-DC battery may be shortened. Therefore, when the DC-DC conversion circuit converts the voltage output by the cell pack into the second voltage, because the second voltage is less than the preset low-voltage alarm voltage, the power supply system may generate the alarm instruction, to notify the maintenance personnel to maintain the power grid as soon as possible.

The first preset condition may include at least one condition in the foregoing description. For example, the depth of discharge of the DC-DC battery 220 reaches the first depth of discharge. It is assumed that the first depth of discharge is 50%. When the DC-DC battery is discharged at the first voltage, and the depth of discharge of the DC-DC battery 220 is 50%, the DC-DC conversion circuit controls the DC-DC battery 220 to output the second voltage, so that a straight-through battery 220 supplies power to the at least one load at the second voltage.

In an embodiment, the DC-DC conversion circuit 222 may convert the voltage output by the cell pack 221 into different voltages. For example, refer to FIG. 7. The DC-DC conversion circuit 222 is configured to: when the voltage of the output port of the DC-DC battery is less than the preset operating voltage, convert the voltage output by the cell pack into the first voltage V1; when the DC-DC battery 220 meets the first preset condition, convert the voltage output by the cell pack 221 into the second voltage V2, where the second voltage is less than the first voltage; and when the DC-DC battery 220 meets a second preset condition, convert the voltage output by the cell pack 221 into a third voltage V3, where the third voltage is less than the second voltage. The second preset condition includes at least one of the following: The depth of discharge of the DC-DC battery 220 reaches a second depth of discharge, the remaining electric energy of the DC-DC battery 220 reaches second remaining electric energy, and the discharge duration of the DC-DC battery 220 reaches second preset duration.

The first voltage V1 is greater than the preset low-voltage alarm voltage, the second voltage is less than the preset alarm voltage, and is greater than a preset LLVD voltage, and the third voltage is less than the preset LLVD voltage, and is greater than a preset BLVD voltage.

Refer to FIG. 7. A low-voltage alarm voltage shown in the figure is the preset low-voltage alarm voltage, for example, the voltage of 48.5 V in the foregoing embodiment. An LLVD voltage is the preset LLVD voltage, for example, the voltage of 47 V in the foregoing embodiment. A BLVD voltage is the preset BLVD voltage, for example, the voltage of 42 V in the foregoing embodiment.

In this embodiment of this application, in a normal case, when the power grid supplies power to the at least one load, a voltage of a direct current at which the power grid supplies power to the at least one load is V0, and V0 may be, for example, 54 V. When the power grid is abnormal, the DC-DC battery 220 supplies power to the at least one load at the voltage V1, and power is supplied to the at least one load at the voltage V2 after the DC-DC battery 220 supplies the power at the voltage V1 for the duration t0. Because V1 is greater than the preset low-voltage alarm voltage, the power supply system does not generate an alarm instruction within the duration t0. This can avoid a case in which power supply is restored after the power grid fails, but the power supply system has generated the alarm instruction, thereby avoiding a waste of maintenance resources. In addition, because V2 is less than the preset low-voltage alarm voltage, when the DC-DC battery 220 supplies power to the at least one load at V2, the power supply system generates an alarm instruction, to notify maintenance personnel to repair the power grid as soon as possible. This can avoid a case in which an alarm is generated only after the DC-DC battery 220 is basically discharged completely, thereby achieving expected alarm effect, improving service performance of the DC-DC battery, and prolonging life of the DC-DC battery.

After the DC-DC battery 220 supplies the power to the at least one load at the voltage V2 for duration t1, the DC-DC battery 220 supplies power to the at least one load at the voltage V3. Because V2 is greater than the preset LLVD voltage, the power supply system does not disconnect a part of loads from the bus within the duration t1. In this way, the DC-DC battery 220 can supply power to all loads that are powered before the power grid fails, to ensure that the DC-DC battery reliably supplies power to all the loads. In addition, because V3 is less than the preset LLVD voltage, when the DC-DC battery supplies the power to the at least one load at V3, the power supply system disconnects a part of the loads from the bus, so that the DC-DC battery 220 supplies power to the remaining loads. This can prolong duration in which the DC-DC battery 220 supplies power to the remaining loads.

After the DC-DC battery 220 supplies the power to the loads at the voltage V3 for duration t2, the DC-DC battery 220 decreases the voltage for power supply to the loads. Because V3 is greater than the preset BLVD voltage, the power supply system does not disconnect the remaining loads from the bus within the duration t2. This can avoid a case in which the DC-DC battery 220 cannot supply power to the remaining loads because the power supply system disconnects the remaining loads from the bus, thereby improving reliability of supplying power to the remaining loads by the DC-DC battery 220. After the DC-DC battery 220 supplies the power to the loads at the voltage V3 for the duration t2, the DC-DC battery 220 decreases the voltage for power supply to the loads. When the voltage output by the DC-DC battery 220 is less than the preset BLVD voltage, the power supply system disconnects all the remaining loads from the bus, so that the DC-DC battery 220 stops supplying power to all the remaining loads. This can reduce the depth of discharge of the DC-DC battery, thereby prolonging life of the DC-DC battery.

In this embodiment of this application, the first preset duration in which the DC-DC battery 220 supplies the power to the at least one load at the first voltage is set. Specifically, when the power grid cannot supply power to the at least one load due to a power grid failure, the DC-DC battery 220 starts to supply power to the at least one load. Because there may also be a residual voltage for power supply to the at least one load after the power grid fails, power supply to the at least one load by the DC-DC battery 220 is a slow voltage step-up process. When a discharge voltage of the DC-DC battery 220 basically reaches a stable voltage, correspondingly, discharge power of the DC-DC battery is also basically stable. Therefore, the DC-DC battery 220 may learn of remaining dischargeable duration of the cell pack 221 based on a quotient of remaining dischargeable electric energy of the cell pack 221 and the discharge power of the DC-DC battery.

For example, if the remaining dischargeable electric energy of the cell pack 221 is 8 kWh, and the discharge power of the DC-DC battery is 2 kW, the remaining dischargeable duration of the cell pack 221 is 4.0 h. If duration in which the maintenance personnel maintain the power grid is 0.5 h, duration required for the voltage of the bus to reach the preset operating voltage is 0.5 h, that is, the duration t1 in the foregoing embodiment is 0.5 h. If expected duration for power supply to a primary load in the loads is 2.5 h, that is, the duration t2 in the foregoing embodiment is 2.5 h, duration in which the DC-DC conversion circuit 222 supplies the power to the at least one load at the first voltage is 4.0-0.5-2.5=1.0 h. In other words, in the process in which the DC-DC battery supplies power to the at least one load, the duration in which the DC-DC battery supplies the power to the at least one load at the second voltage and the duration in which the DC-DC battery supplies the power to the at least one load at the third voltage are preferentially ensured, namely, the duration in which the maintenance personnel maintain the power grid and duration in which the DC-DC battery supplies power to the remaining primary load. This can as much as possible ensure that the power grid restores power supply, thereby increasing a success rate of supplying power to the at least one load by the power grid; and can as much as possible ensure that the DC-DC battery supplies power to the primary load, thereby improving reliability of supplying power to the remaining primary load by the DC-DC battery. In addition, within one hour after the DC-DC battery 220 starts to supply power to the at least one load, the DC-DC battery 220 does not generate an instruction for indicating a low-voltage alarm for the DC-DC battery. Within the one hour, electric energy is always output to the at least one load, and the at least one load is always in a running state. However, for the maintenance personnel, because the power supply system does not generate the instruction for indicating the low-voltage alarm for the DC-DC battery, the maintenance personnel do not repair the power grid. This can avoid a waste of maintenance resources.

In an embodiment, the DC-DC conversion circuit 222 is further configured to convert the voltage output by the cell pack 221 into different voltages periodically, where a voltage after each time of conversion of the DC-DC conversion circuit is less than a voltage before the conversion of the DC-DC conversion circuit, and the voltage output by the DC-DC conversion circuit is constant in each period of time.

In this embodiment of this application, when the power grid cannot supply power to the at least one load due to the power grid failure, the DC-DC battery 220 starts to supply power to the at least one load. In addition, in the process in which the DC-DC battery 220 supplies power to the at least one load, the DC-DC conversion circuit 222 may convert the voltage output by the cell pack 221 into the different voltages periodically, where the voltage after each time of conversion of the DC-DC conversion circuit is less than the voltage before the conversion of the DC-DC conversion circuit. In this way, the voltage of the direct current output by the DC-DC battery 220 to the at least one load gradually decreases. This can prolong duration in which the DC-DC battery 220 supplies power to the at least one load.

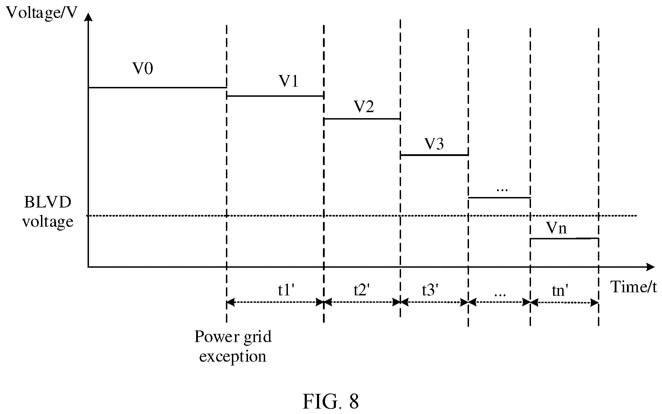

Specifically, refer to FIG. 8. In a normal case, when the power grid supplies power to the at least one load, a voltage of a direct current at which the power grid supplies power to the at least one load is V0. When the power grid is abnormal, the DC-DC conversion circuit 222 converts a direct current output by the cell pack into a voltage V1, so that the DC-DC battery 220 supplies power to the at least one load at the voltage V1. After the DC-DC battery 220 supplies the power at the voltage V1 for duration tl', the DC-DC conversion circuit 222 converts the direct current output by the cell pack into a voltage V2, so that the DC-DC battery 220 supplies power to the at least one load at the voltage V2. After the DC-DC battery 220 supplies the power at the voltage V2 for duration t2', the DC-DC conversion circuit 222 converts the direct current output by the cell pack into a voltage V3, so that the DC-DC battery 220 supplies power to the at least one load at the voltage V3. The rest may be deduced by analogy. When the DC-DC conversion circuit converts the direct current output by the cell pack into a voltage Vn, because the voltage Vn is less than a preset BLVD voltage, the DC-DC battery 220 stops supplying power to the at least one load.

In an actual scenario, each time the DC-DC conversion circuit 222 converts the voltage output by the cell pack 221 into a different voltage, the power supply system may disconnect a part of loads from the bus, so that the DC-DC battery 220 supplies power to the remaining load. In addition, each time the voltage output by the DC-DC battery 220 changes, the DC-DC battery 220 may learn of remaining dischargeable duration of the cell pack 221 based on a quotient of remaining dischargeable electric energy of the cell pack 221 and discharge power of the DC-DC battery. When the DC-DC battery 220 supplies power to the at least one load for a period of time, the power supply system may disconnect a part of loads from the bus, so that the DC-DC battery 220 supplies power only to the remaining load connected to the bus. Because loads currently connected to the DC-DC battery 220 are reduced at this moment, current discharge power of the DC-DC battery also decreases. The DC-DC battery 220 may calculate current remaining dischargeable duration of the DC-DC battery based on current remaining dischargeable electric energy of the cell pack 221 and the current discharge power of the DC-DC battery, and supply power to a part of loads for a period of time based on the current remaining dischargeable duration of the DC-DC battery, where the period of time is less than the current remaining dischargeable duration. The foregoing operations are repeatedly performed until the DC-DC battery 220 is basically discharged completely.

For example, it is assumed that the at least one load includes a load 1, a load 2, a load 3, and a load 4, and power of the four loads is 1 kW, 0.5 kW, 0.2 kW, and 0.3 kW respectively. When the power grid fails, if the remaining dischargeable electric energy of the cell pack 221 is 8 kWh, and the discharge power of the DC-DC battery is 2 kW, the remaining dischargeable duration of the cell pack 221 is 4.0 h. If t1' may be, for example, 1 h after the DC-DC battery supplies the power to the loads for the duration t1', the remaining dischargeable electric energy of the cell pack 221 is 6 kWh. In this case, the power supply system may disconnect a part of the loads from the bus, for example, disconnect the load 1, so that the DC-DC battery supplies power only to the load 2, the load 3, and the load 4. Therefore, power at which the DC-DC battery 220 supplies power to the remaining loads is reduced. Because the loads currently connected to the DC-DC battery include only the load 2, the load 3, and the load 4, the power at which the DC-DC battery supplies power to the loads is reduced to 1 kW, that is, the current discharge power of the DC-DC battery 220 is 1 kW. In this case, the current remaining dischargeable duration of the cell pack 221 is 6/1=6.0 h. It indicates that the DC-DC battery 220 can supply power to the currently connected loads for 6 h. In an actual scenario, to prolong power consumption of a primary load as much as possible, duration in which the DC-DC battery 220 supplies power to the currently connected loads is less than 6 h. For example, t2' may be 2 h. In this case, remaining dischargeable electric energy of the cell pack 221 is (6-1)*2=4 kWh. In this case, the power supply system may continue to disconnect a part of the loads from the DC-DC battery 220, for example, disconnect the load 2, so that the DC-DC battery supplies power only to the load 3 and the load 4. Therefore, power at which the DC-DC battery 220 supplies power to the loads is further reduced. Because the loads currently connected to the DC-DC battery include only the load 3 and the load 4, the power at which the DC-DC battery supplies power to the loads is reduced to 0.5 kW, that is, the current discharge power of the DC-DC battery 220 is 0.5 kW. In this case, the current remaining dischargeable duration of the cell pack 221 is 4/0.5=8.0 h. It indicates that the DC-DC battery 220 can supply power to the currently connected loads for 8 h. In an actual scenario, duration in which the DC-DC battery 220 supplies power to the currently connected loads is less than 8 h, the foregoing operations are repeatedly performed until the DC-DC battery 220 is basically discharged completely and the power supply system disconnects all the loads from the bus.

In this embodiment of this application, in the discharge process of the DC-DC battery, the DC-DC battery 220 supplies power to the at least one load at different voltages. Each time the DC-DC conversion circuit converts a voltage output by the cell pack 221 into a different voltage, the power at which the DC-DC battery 220 supplies power to the at least one load is reduced, that is, the discharge power of the DC-DC battery 220 is reduced. This can as much as possible prolong duration in which the DC-DC battery supplies power to a part of loads. Specifically, after the DC-DC battery is discharged for a period of time, the power supply system may disconnect a part of loads from the bus, so that loads currently connected to the DC-DC battery are reduced, correspondingly, the power at which the DC-DC battery 220 supplies power to the loads is also reduced, and the DC-DC battery recalculates current remaining dischargeable duration of the DC-DC battery. After the DC-DC battery is discharged for a period of time again, the power supply system may disconnect a part of loads from the bus again, so that loads currently connected to the DC-DC battery are further reduced, the power at which the DC-DC battery 220 supplies power to the loads continues to decrease, and the DC-DC battery recalculates current remaining dischargeable duration of the DC-DC battery. This process repeats for a plurality of times until the DC-DC battery is basically discharged completely, for example, the voltage of the direct current output by the DC-DC battery is less than the preset BLVD voltage. This can achieve an objective of hierarchical precise power backup for loads, and can also as much as possible prolong duration in which the DC-DC battery supplies power to a primary load, to ensure reliable power supply to the primary load.

In an embodiment, the first voltage is less than a direct current voltage of the bus in a case in which the power grid connected to the bus supplies power to the at least one load.

For that the first voltage is less than the direct current voltage of the bus in the case in which the power grid connected to the bus supplies power to the at least one load, refer to the foregoing related content. Details are not described again. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply system, wherein the power supply system comprises a straight-through battery and a direct current-direct current, DC-DC battery, the DC-DC battery comprises a cell pack and a DC-DC conversion circuit, and both the straight-through battery and the DC-DC battery are configured to supply power to at least one load through a bus;
under a condition that a voltage of the bus is less than a preset operating voltage,
when a voltage of a direct current output by the straight-through battery is greater than a voltage of a direct current output by the DC-DC battery, the straight-through battery is configured to supply power to the at least one load; or
when a voltage of a direct current output by the straight-through battery is less than a voltage of a direct current output by the DC-DC battery, the DC-DC battery is configured to supply power to the at least one load; and
the DC-DC conversion circuit is configured to convert a voltage output by the cell pack, for the straight-through battery and the DC-DC battery to alternately supply power to the at least one load for a plurality of times.

2. The power supply system according to claim 1, wherein an initial voltage of the direct current output by the straight-through battery is greater than a first voltage corresponding to the direct current output by the DC-DC battery, and the straight-through battery is configured to supply power to the at least one load; and
when the voltage of the direct current output by the straight-through battery is equal to the first voltage, the DC-DC battery is configured to output the direct current with the first voltage to supply power to the at least one load.

3. The power supply system according to claim 2, wherein
when the DC-DC battery is discharged at the first voltage, and the DC-DC battery meets a first preset condition, the DC-DC conversion circuit is configured to control the DC-DC battery to output a second voltage that is less than the first voltage, and the straight-through battery is configured to supply power to the at least one load, wherein the first preset condition comprises at least one of the following: a depth of discharge of the DC-DC battery reaches a first depth of discharge, remaining electric energy of the DC-DC battery reaches first remaining electric energy, and the DC-DC battery is discharged at the first voltage for first preset duration; and
when the voltage of the direct current output by the straight-through battery is equal to the second voltage, the DC-DC battery is configured to output the direct current with the second voltage to supply power to the at least one load.

4. The power supply system according to claim 3, wherein
when the DC-DC battery is discharged at the second voltage, and the DC-DC battery meets a second preset condition, the DC-DC conversion circuit is configured to control the DC-DC battery to output a third voltage that is less than the second voltage, and the straight-through battery is configured to supply power to the at least one load, wherein the second preset condition comprises at least one of the following: the depth of discharge of the DC-DC battery reaches a second depth of discharge, the remaining electric energy of the DC-DC battery reaches second remaining electric energy, and the DC-DC battery is discharged at the second voltage for second preset duration, wherein the second depth of discharge is greater than the first depth of discharge, and the second remaining electric energy is less than the first remaining electric energy; and
when the voltage of the direct current output by the straight-through battery is equal to the third voltage, the DC-DC battery is configured to output the direct current with the third voltage to supply power to the at least one load.

5. The power supply system according to claim 4, wherein
when the DC-DC battery is discharged at the third voltage, and the DC-DC battery meets a third preset condition, the DC-DC conversion circuit is configured to control the DC-DC battery to output a fourth voltage that is less than the third voltage, and the straight-through battery is configured to supply power to the at least one load, wherein the third preset condition comprises at least one of the following: the depth of discharge of the DC-DC battery reaches a third depth of discharge, the remaining electric energy of the DC-DC battery reaches third remaining electric energy, and the DC-DC battery is discharged at the third voltage for third preset duration, wherein the third depth of discharge is greater than the second depth of discharge, and the third remaining electric energy is less than the second remaining electric energy; and
when the voltage of the direct current output by the straight-through battery is equal to the fourth voltage, the DC-DC battery is configured to output the direct current with the fourth voltage to supply power to the at least one load.

6. The power supply system according to claim 1, wherein a first voltage corresponding to the direct current output by the DC-DC battery is greater than an initial voltage of the direct current output by the straight-through battery, and the DC-DC battery is configured to output the direct current with the first voltage to supply power to the at least one load; and
when the DC-DC battery is discharged at the first voltage, and the DC-DC battery meets a first preset condition, the DC-DC conversion circuit is configured to control the DC-DC battery to output a second voltage that is less than the initial voltage of the straight-through battery, and the straight-through battery is configured to supply power to the at least one load, wherein
the first preset condition comprises at least one of the following:
a depth of discharge of the DC-DC battery reaches a first depth of discharge, remaining electric energy of the DC-DC battery reaches first remaining electric energy, and the DC-DC battery is discharged at the first voltage for first preset duration.

7. The power supply system according to claim 6, wherein
when the voltage of the direct current output by the straight-through battery is equal to the second voltage, the DC-DC battery is configured to output the direct current with the second voltage to supply power to the at least one load; and
when the DC-DC battery is discharged at the second voltage, and the DC-DC battery meets a second preset condition, the DC-DC conversion circuit is configured to control the DC-DC battery to output a third voltage that is less than the second voltage, and the straight-through battery is configured to supply power to the at least one load, wherein
the second preset condition comprises at least one of the following:
the depth of discharge of the DC-DC battery reaches a second depth of discharge, the remaining electric energy of the DC-DC battery reaches second remaining electric energy, and the DC-DC battery is discharged at the second voltage for second preset duration, wherein the second depth of discharge is greater than the first depth of discharge, and the second remaining electric energy is less than the first remaining electric energy.

8. The power supply system according to claim 7, wherein
when the voltage of the direct current output by the straight-through battery is equal to the third voltage, the DC-DC battery is configured to output the direct current with the third voltage to supply power to the at least one load; and
when the DC-DC battery is discharged at the third voltage, and the DC-DC battery meets a third preset condition, the DC-DC conversion circuit is configured to control the DC-DC battery to output a fourth voltage that is less than the third voltage, and the straight-through battery is configured to supply power to the at least one load, wherein
the third preset condition comprises at least one of the following:
the depth of discharge of the DC-DC battery reaches a third depth of discharge, the remaining electric energy of the DC-DC battery reaches third remaining electric energy, and the DC-DC battery is discharged at the third voltage for third preset duration, wherein the third depth of discharge is greater than the second depth of discharge, and the third remaining electric energy is less than the second remaining electric energy.

9. The power supply system according to any one of claims 2 to 8, wherein the first voltage is greater than a preset alarm voltage, and the preset alarm voltage indicates the power supply system to generate an instruction for indicating a low-voltage alarm for the straight-through battery or the DC-DC battery.

10. The power supply system according to any one of claims 3 to 8, wherein the second voltage is less than a preset alarm voltage, and the preset alarm voltage indicates the power supply system to generate an instruction for indicating a low-voltage alarm for the straight-through battery or the DC-DC battery; and
the power supply system is configured to:
when the straight-through battery or the DC-DC battery supplies power to the at least one load at the second voltage, generate the instruction for indicating the low-voltage alarm for the straight-through battery or the DC-DC battery.

11. The power supply system according to claim 4 or 5 or claim 7 or 8, wherein the third voltage is less than a preset LLVD voltage, and the preset LLVD voltage indicates the power supply system to disconnect a part of loads from the bus; and
the power supply system is configured to:
disconnect the part of loads from the bus when the straight-through battery or the DC-DC battery supplies power to the at least one load at the third voltage.

12. The power supply system according to claim 5 or 8, wherein the fourth voltage is less than a preset BLVD voltage, and the preset BLVD voltage indicates the power supply system to control the straight-through battery or the DC-DC battery to stop outputting the direct current; and
the power supply system is configured to:
when the voltage of the direct current output by the straight-through battery or the DC-DC battery reaches the fourth voltage, control the straight-through battery or the DC-DC battery to stop outputting the direct current.

13. The power supply system according to any one of claims 1 to 12, wherein the power supply system is configured to:
disconnect, from the bus each time the straight-through battery replaces the DC-DC battery to supply power to the at least one load, or each time the DC-DC battery replaces the straight-through battery to supply power to the at least one load, a part of loads currently connected to the bus.

14. A direct current-direct current DC-DC battery, wherein the DC-DC battery comprises a cell pack and a DC-DC conversion circuit, and the DC-DC conversion circuit is configured to convert a voltage output by the cell pack, and output a voltage after the conversion to at least one load through a bus; and
the DC-DC conversion circuit is configured to: when a voltage of an output port of the DC-DC battery is less than a preset operating voltage, convert the voltage output by the cell pack into a first voltage; and when the DC-DC battery meets a first preset condition, convert the voltage output by the cell pack into a second voltage, wherein the second voltage is less than the first voltage; and
the first preset condition comprises at least one of the following:
a depth of discharge of the DC-DC battery reaches a first depth of discharge, remaining electric energy of the DC-DC battery reaches first remaining electric energy, and discharge duration of the DC-DC battery reaches first preset duration.

15. The DC-DC battery according to claim 14, wherein the DC-DC conversion circuit is further configured to:
convert the voltage output by the cell pack into different voltages periodically, wherein a voltage after each time of conversion of the DC-DC conversion circuit is less than a voltage before the conversion of the DC-DC conversion circuit, and the voltage output by the DC-DC conversion circuit is constant in each period of time.
